# EUROPEAN PATENT APPLICATION

(11) **EP 4 485 600 A1**
(43) Date of publication of application: **01.01.2025**
(21) Application number: 24172224.8
(22) Date of filing: 24.04.2024
(51) Int. Cl.: H01M 10/056, H01M 4/58, H01M 4/587, H01M 4/62, H01M 10/04, H01M 10/0525, H01M 50/48

(54) **SOLID SECONDARY BATTERY**

(30) Priority: 26.06.2023 KR 20230082126
(71) Applicant: Samsung SDI Co., Ltd., Yongin-si, Gyeonggi-do 17084 (KR)
(72) Inventor: Son, Inhyuk, 17084 Gyeonggi-do (KR); Jo, Sungnim, 17084 Gyeonggi-do (KR); Shim, Kyueun, 17084 Gyeonggi-do (KR); Lim, Hyungsub, 17084 Gyeonggi-do (KR); Park, Taehyun, 17084 Gyeonggi-do (KR); Lee, Jieun, 17084 Gyeonggi-do (KR)
(74) Representative: Michalski Hüttermann & Partner Patentanwälte mbB

(57) **Abstract**

A solid secondary battery includes a cathode layer, an anode layer, and a solid electrolyte layer between the cathode layer and the anode layer and further includes a first organic electrolyte between the cathode layer and the solid electrolyte layer, a second organic electrolyte between the anode layer and the solid electrolyte layer, a third organic electrolyte in the solid electrolyte layer, or any combination thereof, wherein the first organic electrolyte, the second organic electrolyte, and the third organic electrolyte each independently include a polymer electrolyte, a liquid electrolyte, or any combination thereof, the liquid electrolyte having a viscosity of 10 cps or more at 25 °C and 1 atm, wherein the cathode layer includes a cathode current collector and a cathode active material layer on at least one surface of the cathode current collector, the cathode active material layer including a Li₂S-containing composite.

## Description

### CROSS-REFERENCE TO RELATED APPLICATION

The present application claims priority to and the benefit of Korean Patent Application No. 10-2023-0082126, filed on June 26, 2023, in the Korean Intellectual Property Office, the entire content of which is incorporated herein by reference.

### BACKGROUND

### 1. Field

One or more embodiments of the present disclosure relate to a solid secondary battery.

### 2. Description of the Related Art

In line with recent requirements in industry, batteries with relatively high energy density and relatively high stability are desired and actively being developed. For example, lithium batteries are commonly utilized for one or more suitable purposes in information devices, communication devices, vehicles, and/or the like. When the lithium batteries are utilized for vehicles, e.g., automobiles, automobile safety is greatly emphasized as it directly affects human wellbeing.

Lithium or secondary batteries employing liquid electrolytes may be more susceptible to a fire and/or explosion caused by a short circuit. Therefore, secondary batteries employing solid electrolytes in place of liquid electrolytes are proposed. Compared to liquid electrolytes, solid electrolytes may be less likely to cause a fire.

Secondary batteries, with (employing) solid electrolytes instead of liquid electrolytes, may reduce a risk of fire or explosion. As such, a secondary battery employing a solid electrolyte may provide improved safety.

### SUMMARY

One or more aspects of embodiments of the present disclosure are directed toward a solid secondary battery which has improved cycling performance by having an organic electrolyte disposed on the surface of and/or in/inside a solid electrolyte layer.

Additional aspects will be set forth in part in the description which follows and, in part, will be apparent from the description, or may be learned by practice of the presented embodiments of the present disclosure.

According one or more embodiments of the present disclosure, a solid secondary battery includes:
a cathode layer, an anode layer, a solid electrolyte layer between the cathode layer and the anode layer, and (also)
a first organic electrolyte between the cathode layer and the solid electrolyte layer, a second organic electrolyte between the anode layer and the solid electrolyte layer, a third organic electrolyte in (e.g., disposed in) the solid electrolyte layer, or any combination thereof (i.e., at least one or more of first organic electrolyte between the cathode layer and the solid electrolyte layer, a second organic electrolyte between the anode layer and the solid electrolyte layer, and a third organic electrolyte in (e.g., disposed in) the solid electrolyte layer),
wherein the first organic electrolyte, the second organic electrolyte, and the third organic electrolyte each independently include a polymer electrolyte, a liquid electrolyte, or any combination thereof (i.e., the first organic electrolyte include at least one or more of a polymer electrolyte and a liquid electrolyte; the second organic electrolyte include at least one or more of a polymer electrolyte and a liquid electrolyte; and the third organic electrolyte include at least one or more of a polymer electrolyte and a liquid electrolyte), the liquid electrolyte having a viscosity of 10 cps or more at 25 °C and 1 atm,
wherein the cathode layer includes a cathode current collector and a cathode active material layer on (e.g., disposed on) at least one surface (or side) (e.g., on one or both (e.g., two opposite) surfaces (or sides)) of the cathode current collector, the cathode active material layer including a Li₂S-containing composite, and
wherein the anode layer includes an anode current collector and a first anode active material layer on (e.g., disposed on) one surface (or side) of the anode current collector.

### BRIEF DESCRIPTION OF THE DRAWINGS

The accompanying drawing is included to provide a further understanding of the present disclosure, and is incorporated in and constitutes a part of this specification. The drawing illustrates example embodiments of the present disclosure and, together with the description, serve to explain principles of present disclosure. The above and other aspects, features, and advantages of certain embodiments of the present disclosure will be more apparent from the following description taken in conjunction with the accompanying drawings, in which:
FIGs. 1A, 1B, and 1C are each a cross-sectional view of a solid secondary battery according one or more embodiments of the present disclosure;
FIGs. 2A, 2B, and 2C are each a cross-sectional view of a solid secondary battery according one or more embodiments of the present disclosure;
FIGs. 3A, 3B, and 3C are each a cross-sectional view of a solid secondary battery according one or more embodiments of the present disclosure;
FIGs. 4A, 4B, and 4C are each a schematic diagram showing a concentration change of an organic electrolyte depending on a location in a solid electrolyte layer according to one or more embodiments of the present disclosure;
FIG. 5 is a cross-sectional view of a solid secondary battery according to one or more embodiments of the present disclosure;
FIG. 6 is a cross-sectional view of a solid secondary battery according to one or more embodiments of the present disclosure;
FIG. 7 is a cross-sectional view of a solid secondary battery according to one or more embodiments of the present disclosure;
FIG. 8 is a cross-sectional view of a solid secondary battery according to one or more embodiments of the present disclosure;
FIG. 9 is a cross-sectional view of a solid secondary battery according to one or more embodiments of the present disclosure;
FIG. 10 is a cross-sectional view of a solid secondary battery according to one or more embodiments of the present disclosure; and
FIG. 11 is a cross-sectional view of a solid secondary battery according to one or more embodiments of the present disclosure.

### DETAILED DESCRIPTION

Reference will now be made in more detail to embodiments, examples of which are illustrated in the accompanying drawings, wherein like reference numerals refer to like elements throughout the present disclosure, and duplicative descriptions thereof may not be provided for conciseness. In this regard, the embodiments of the present disclosure may have different forms and should not be construed as being limited to the descriptions set forth herein. Accordingly, the embodiments of the present disclosure are merely described, by referring to the drawings, to explain aspects of the present disclosure. As utilized herein, the term "and/or" or "or" may include any and all combinations of one or more of the associated listed items. Expressions such as "at least one of," "one of," and "selected from," when preceding a list of elements, modify the entire list of elements and do not modify the individual elements of the list. For example, "at least one of a, b or c", "at least one selected from among a, b, and c", "at least one selected from among a to c", etc., may indicates only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

Unless otherwise defined, all terms (including technical and scientific terms) utilized herein have the same meaning as commonly understood by one of ordinary skill in the art to which the present disclosure belongs. It will be further understood that terms, such as those defined in commonly utilized dictionaries, should be interpreted as having a meaning that is consistent with their meaning in the context of the present disclosure and the relevant art and should not be interpreted in an idealized sense or an overly formal sense unless expressly so defined herein.

Embodiments are described herein with reference to cross section illustrations that are schematic illustrations of idealized embodiments. As such, variations from the illustrated shapes as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, angles that are illustrated as being sharp may be rounded. Thus, the regions illustrated in the drawings are schematic in nature and their shapes are not intended to illustrate the precise shape of a region and are not intended to limit the scope of the present claims.

Embodiments of present disclosure may, however, be embodied in many different forms and should not be construed as limited to the example embodiments set forth herein. Rather, these example embodiments are provided so that this disclosure will be thorough and complete, and will fully convey the scope of the present disclosure to those skilled in the art. In the drawings, like numbers refer to like elements throughout the disclosure, and duplicative descriptions thereof may not be provided.

It will also be understood that when an element is referred to as being "on" or "over" another element, it can be directly on the other element or intervening elements may also be present. In contrast, when an element is referred to as being "directly on" or "directly over" another element, there are no intervening elements present.

It will be understood that, although the terms "first", "second", "third", etc. may be utilized herein to describe one or more suitable elements, components, regions, layers, and/or sections, these elements, components, regions, layers, and/or sections should not be limited by these terms. These terms are only utilized to distinguish one element, component, region, layer, or section, from another element, component, region, layer, or section. For example, a first element, component, region, layer, or section could be termed a second element, component, region, layer, or section, without departing from the teachings of the present disclosure.

The terminology utilized herein is for the purpose of describing particular embodiments only and is not intended to be limiting of the present disclosure. As utilized herein, the singular forms "a", "an", and "the" are intended to include the plural forms as well including "at least one", unless the context clearly indicates otherwise. The term "at least one" should not be interpreted as being limited to a singular form. As utilized herein, the term "and/or" or "or" may include any and all combinations of one or more of the associated listed items. It will be further understood that the terms "comprise(s)/comprising" and/or " include(s)/including," and/or "have(has)/having" when utilized in this specification, specify the presence of stated features, regions, integers, steps, operations, elements, and/or components, but do not preclude the presence or addition of one or more other features, regions, integers, steps, operations, elements, components, and/or groups thereof. Further, the use of "may" when describing embodiments of the present disclosure refers to "one or more embodiments of the present disclosure".

Furthermore, spatially relative terms, such as "lower", "bottom", or "below" and "upper", "top", or "above" may be utilized herein to conveniently describe one element or feature's relationship to another element or feature. It will be understood that spatially relative terms are intended to encompass different orientations of the device while the device is in utilization or operated, in addition to the orientation depicted in the drawings. For example, when the device in one of the drawings is turned over, elements described as being on the "lower" or "bottom" side of other elements would then be oriented on "upper" or "top" sides of the other elements. Therefore, example term "lower" may therefore, encompasses both (e.g., simultaneously) an orientation of "lower" and "upper". The device may be placed in other orientations (may be rotated by 90 degrees or in a different direction), and spatially relative terms utilized herein may be interpreted accordingly.

"Group" as utilized herein may refer to a group in the Periodic Table of Elements of the Elements according to the 1-18 Group numbering system by the International Union of Pure and Applied Chemistry ("IUPAC").

The term "particle diameter" as utilized herein refers to an average particle diameter if (e.g., when) particles are spherical, and refers to an average major axis length if (e.g., when) particles are non-spherical. The particle diameter may be measured utilizing a particle size analyzer (PSA). The term "particle diameter" may refer to an average particle diameter, for example. The term "average particle diameter" may refer to, for example, a median particle diameter (D50).

D50 may refer to a particle size corresponding to a cumulative 50 vol % as calculated from a side of particles with the smallest particle size to a side of particles with the largest particle size in a particle size distribution as measured by a laser diffraction method.

D90 may refer to a particle size corresponding to a cumulative 90 vol % as calculated from a side of particles with the smallest particle size to a side of particles with the largest particle size in a particle size distribution as measured by a laser diffraction method.

D10 may refer to a particle size corresponding to a cumulative 10 vol % as calculated from a side of particles with the smallest particle size to a side of particles with the largest particle size in a particle size distribution as measured by a laser diffraction method.

"Viscosity" in the present disclosure may be measured utilizing viscometer, for example, in one or more embodiments, a rotational viscometer such as LV DV-II + Pro Viscometer (cone-plate type or kind) manufactured by Brookfield. For example, viscosity may be measured at 1 atm and 25 °C after dissolving the test sample such as an ionic liquid at a concentration of 35 wt% in dimethylformamide (DMF). For example, in one or more embodiments, viscosity may be measured utilizing a spindle of S40, at 15 rpm, with a sample loading amount of 1 mL.

As utilized herein, "weight-average molecular weight" may refer to a value converted relative to a polystyrene standard measured by gel permeation chromatography (GPC). A molecular weight may be, for example, a weight-average molecular weight. For example, in one or more embodiments, a weight-average molecular weight measurement utilizing GPC may be performed utilizing the Agilent 1200 Series, an Agilent PL MIXED-B column as a column, and tetrahydrofuran (THF) as a solvent.

As utilized herein, the term "metal" refers to both (e.g., simultaneously) metals and metalloids such as silicon and/or germanium, in an elemental or ionic state.

As utilized herein, the term "alloy" refers to a mixture of two or more metals.

The term "electrode active material" as utilized herein refers to an electrode material capable of undergoing lithiation and delithiation.

As utilized herein, the term "cathode active material" refers to a cathode material capable of undergoing lithiation and delithiation.

As utilized herein, the term "anode active material" refers to an anode material capable of undergoing lithiation and delithiation.

As utilized herein, the terms "lithiation" and "to lithiate" refer to a process of adding lithium to an electrode active material.

As utilized herein, the terms "delithiation" and "to delithiate" refer to a process of removing lithium from an electrode active material.

As utilized herein, the term "charging" or "to charge" refers to a process of providing electrochemical energy to a battery.

As utilized herein, the term "discharging" or "to discharge" refers to a process of removing electrochemical energy from a battery.

As utilized herein, the terms "positive electrode" and "cathode" refer to an electrode at which electrochemical reduction and lithiation take place during a discharging process.

As utilized herein, the terms "negative electrode" and "anode" refer to an electrode at which electrochemical oxidation and delithiation take place during a discharging process.

While example embodiments will be described herein, alternatives, modifications, variations, improvements, and substantial equivalents of the embodiments disclosed herein, including those that are not presently unforeseen or unappreciated, may arise to applicants or those skilled in the art. Accordingly, the appended claims as filed and as they may be amended are intended to embrace all such alternatives, modifications, variations, improvements and substantial equivalents.

Hereinbelow, a solid secondary battery according to one or more embodiments will be described in greater detail.

### Solid Secondary Battery

A solid secondary battery according to one or more embodiments may include a cathode layer; an anode layer; and a solid electrolyte layer between the cathode layer and the anode layer, and further include a first organic electrolyte between the cathode layer and the solid electrolyte layer, a second organic electrolyte between the anode layer and the solid electrolyte layer, a third organic electrolyte in (e.g., disposed in) the solid electrolyte layer, or any combination thereof, wherein the first organic electrolyte, the second organic electrolyte, and the third organic electrolyte may each independently include a polymer electrolyte, a liquid electrolyte, or any combination thereof, the liquid electrolyte having a viscosity of 10 cps or more at 25 °C and 1 atm, wherein the cathode layer may include a cathode current collector and a cathode active material layer on (e.g., disposed on) at least one surface (side) (e.g., one surface or both (e.g., two opposite) surfaces (sides)) of the cathode current collector, the cathode active material layer including a Li₂S-containing composite, and wherein the anode layer may include an anode current collector and a first anode active material layer on (e.g., disposed on) one surface (side) of the anode current collector. The solid secondary battery may further include at least one or more of a first interlayer between the cathode layer and the solid electrolyte layer and a second interlayer between the anode layer and the solid electrolyte layer. The first interlayer may include the first organic electrolyte. The second interlayer may include the second organic electrolyte.

Because the solid secondary battery includes a high-viscosity organic electrolyte (e.g., a polymer electrolyte and/or a liquid electrolyte having a high viscosity) between the cathode layer and the solid electrolyte layer, between the anode layer and the solid electrolyte layer, or in/within the solid electrolyte layer, an interfacial resistance between the cathode layer and/or the anode layer and the solid electrolyte layer may decrease, and the solid electrolyte layer may more easily accommodate volume changes of the cathode layer and/or the anode layer during charging and discharging of the solid secondary battery. In some embodiments, as the high-viscosity organic electrolyte fills pin-holes and/or the like, on the surface of the solid electrolyte layer, defect formations in the solid electrolyte layer, such as cracks, may be suppressed or reduced. Because the high-viscosity organic electrolyte reduces the contact surface between the solid electrolyte layer and oxygen, gas generation due to side reactions may be suppressed or reduced, and a decrease in ionic conductivity may be suppressed or reduced. The cycling performance of the solid secondary battery may further improve. For example, in one or more embodiments, the solid secondary battery may have improved high-rate capability, lifespan characteristics, and/or the like.

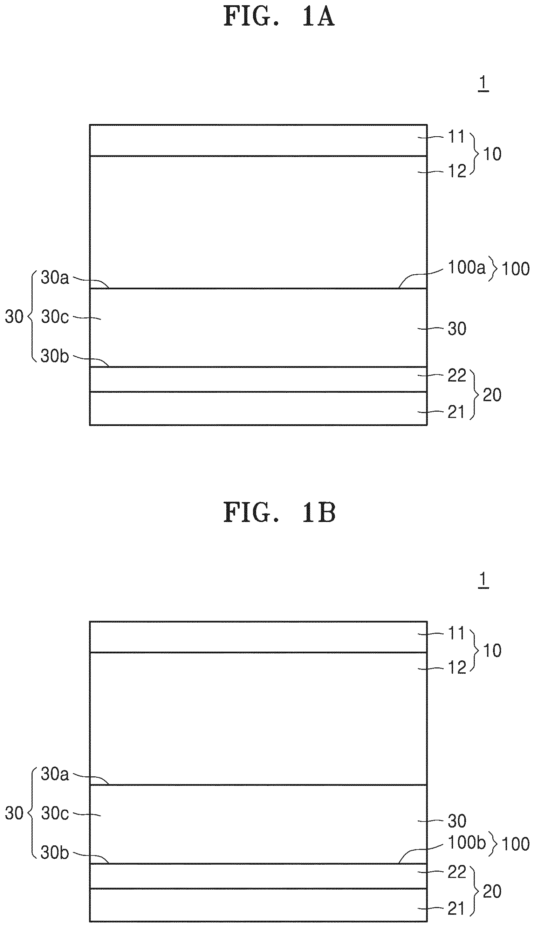

Referring to FIGs. 1A-1C, 2A-2C, 3A-3C, 4A-4C, and 5 to 9, in one or more embodiments, a solid secondary battery 1 may include a high-viscosity organic electrolyte 100 (i.e., an organic electrolyte 100 with a high viscosity), which is disposed on/in at least one selected from among the following: one surface 30a of the solid electrolyte layer; the other surface 30b opposite (facing away from) the one surface 30a of the solid electrolyte layer 30; and an inner solid electrolyte layer 30c. The high-viscosity organic electrolyte 100 may have improved flexibility than an inorganic electrolyte. The high-viscosity organic electrolyte 100 may include a polymer electrolyte, a liquid electrolyte, or any combination thereof, and may have a viscosity of 10 cps or more at 25 °C. The viscosity unit, cps, represents centipoise.

Referring to FIGs. 1A-1C, 2A-2C, 3A-3C, 4A-4C, and 5 to 9, in one or more embodiments, a solid secondary battery 1 may include: a cathode layer 10; an anode layer 20; and a solid electrolyte layer 30 between the cathode layer 10 and the anode layer 20. The solid secondary battery 1 may include a first organic electrolyte 100a between the cathode layer 10 and the solid electrolyte layer 30, a second organic electrolyte 100b between the anode layer 20 and the solid electrolyte layer 30, a third organic electrolyte 100c in (e.g., disposed in) the solid electrolyte layer 30, or any combination thereof. The first organic electrolyte 100a, the second organic electrolyte 100b, and the third organic electrolyte 100c may each independently include a polymer electrolyte, a liquid electrolyte, or any combination thereof. The viscosity of the liquid electrolyte may be 10 cps or more at 25 °C and 1 atm. The cathode layer 10 may include a cathode current collector 11, and a cathode active material layer 12 on at least one surface (side) (e.g., one surface or both (two opposite) surfaces (sides)) of the cathode current collector 11, the cathode active material layer 12 including a Li₂S-containing composite. The anode layer 20 may include an anode current collector 21 and a first anode active material layer 22 on one surface of the anode current collector 21.

### Solid Electrolyte Layer

### Solid Electrolyte Layer: Organic Electrolyte

Referring to FIGs. 1A to 1C, in one or more embodiments, the solid electrolyte layer 30 may include one or more selected from among the first organic electrolyte 100a between the cathode layer 10 and the solid electrolyte layer 30, the second organic electrolyte 100b between the anode layer 20 and the solid electrolyte layer 30, and the third organic electrolyte 100c in (e.g., disposed in) the solid electrolyte layer 30.

Referring to FIG. 1A, in some embodiments, the solid electrolyte layer 30 may include the first organic electrolyte 100a on (e.g., disposed on) one surface 30a of the solid electrolyte layer, or on (e.g., disposed on) one surface of the cathode layer 10. As the one surface of the cathode layer 10 is on the one surface 30a of the solid electrolyte layer, the first organic electrolyte 100a may be between the cathode layer 10 and the solid electrolyte layer 30. Because the first organic electrolyte 100a having flexibility is disposed between the cathode layer 10 and the solid electrolyte layer 30, an interfacial resistance between the cathode layer 10 and the solid electrolyte layer 30 may decrease. A pin-hole on the one surface 30a of the solid electrolyte layer may be filled by the first organic electrolyte 100a. By including the first organic electrolyte 100a, the internal resistance of the solid secondary battery 1 may decrease, and the solid electrolyte layer 30 may more easily accommodate volume changes of the cathode layer 10 during charging and discharging of the solid secondary battery 1.

Referring to FIG. 1B, in some embodiments, the solid electrolyte layer 30 may include the second organic electrolyte 100b, which is on the other surface 30b opposite (facing away from) the one surface 30a of the solid electrolyte layer, or disposed on one surface of the anode layer 20. As the one surface of the anode layer 20 is on the other surface 30b of the solid electrolyte layer, the second organic electrolyte 100b may be between the anode layer 20 and the solid electrolyte layer 30. Because the second organic electrolyte 100b having flexibility is between the anode layer 20 and the solid electrolyte layer 30, an interfacial resistance between the anode layer 20 and the solid electrolyte layer 30 may decrease. A pin-hole on the other surface 30b of the solid electrolyte layer may be filled by the second organic electrolyte 100b. By including the second organic electrolyte 100b, the internal resistance of the solid secondary battery 1 may decrease, and the solid electrolyte layer 30 may more easily accommodate volume changes of the anode layer 20 during charging and discharging of the solid secondary battery 1.

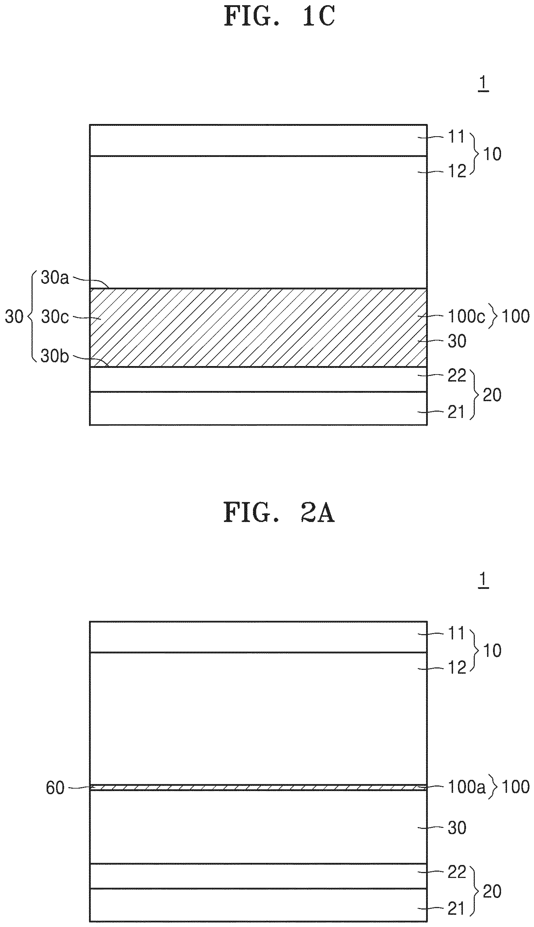

Referring to FIG. 1C, in some embodiments, the solid electrolyte layer 30 may include, for example, the third organic electrolyte 100c in (e.g., disposed in) the solid electrolyte layer 30. Because the third organic electrolyte 100c having flexibility is disposed in an inner solid electrolyte layer 30c, the internal resistance of the solid electrolyte layer 30 may decrease. A pin-hole in the solid electrolyte layer interior 30c may be filled by the third organic electrolyte 100c. By including the third organic electrolyte 100c, the internal resistance of the solid secondary battery 1 may decrease, and the solid electrolyte layer 30 may more easily accommodate volume changes of the cathode layer 10 and/or the anode layer 20 during charging and discharging of the solid secondary battery 1.

Referring to FIG. 2A, in some embodiments, the solid secondary battery 1 may further include, for example, a first interlayer 60 between the cathode layer 10 and the solid electrolyte layer 30. The first interlayer 60 may include the first organic electrolyte 100a. For example, in one or more embodiments, the first organic electrolyte 100a may form the first interlayer 60 between the cathode layer 10 and the solid electrolyte layer 30. Because the solid secondary battery 1 includes the first interlayer 60, an interfacial resistance between the cathode layer 10 and the solid electrolyte layer 30 may further decrease. The cycling performance of the solid secondary battery 1 may further improve.

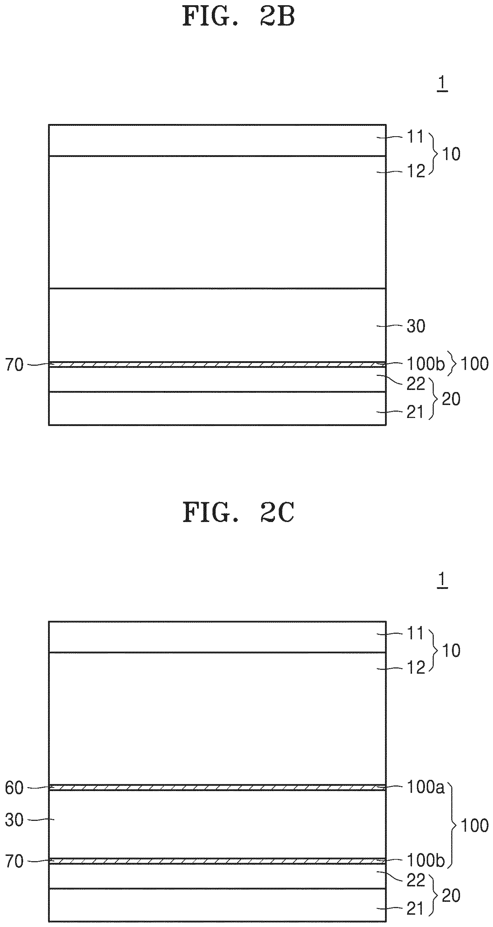

Referring to FIG. 2B, in some embodiments, the solid secondary battery 1 may further include, for example, a second interlayer 70 between the anode layer 20 and the solid electrolyte layer 30. The second interlayer 70 may include the second organic electrolyte 100b. For example, in one or more embodiments, the second organic electrolyte 100b may form the second interlayer 70 between the anode layer 20 and the solid electrolyte layer 30. Because the solid secondary battery 1 includes the second interlayer 70, an interfacial resistance between the anode layer 20 and the solid electrolyte layer 30 may further decrease. The cycling performance of the solid secondary battery 1 may further improve.

Referring to FIG. 2C, in some embodiments, the solid secondary battery 1 may include both (e.g., simultaneously) the first interlayer 60 and the second interlayer 70. Because the solid secondary battery 1 includes both (e.g., simultaneously) the first interlayer 60 and the second interlayer 70, an interfacial resistance between the cathode layer 10 and the solid electrolyte layer 30, and an interfacial resistance between the anode layer 20 and the solid electrolyte layer 30 may further decrease. Because the internal resistance of the solid secondary battery 1 further decreases, the cycling performance of the solid secondary battery 1 may further improve.

The first organic electrolyte 100a, the second organic electrolyte 100b, and the third organic electrolyte 100c may each independently be a polymer solid electrolyte, a polymer gel electrolyte, a liquid electrolyte, or any combination thereof. The first organic electrolyte 100a, the second organic electrolyte 100b, and the third organic electrolyte 100c may be, for example, the same or different from each other.

In one or more embodiments, the organic electrolyte 100 may include, for example, a polymer electrolyte. The viscosity of the polymer electrolyte may be, for example, higher than that of a liquid electrolyte.

The polymer electrolyte may be an electrolyte including a polymer. The polymer electrolyte may include, for example, a polymer solid electrolyte, a polymer gel solid electrolyte, or any combination thereof (i.e., the polymer electrolyte may include at least one or more of a polymer solid electrolyte and a polymer gel solid electrolyte.

In some embodiments, the polymer electrolyte, depending on the presence of liquid therein, may be categorized as a polymer solid electrolyte or a polymer gel electrolyte. In some embodiments, the polymer electrolyte, depending on its state at 25 °C and 1 atm, may be categorized as a polymer solid electrolyte or a polymer gel electrolyte. For example, in one or more embodiments, the polymer solid electrolyte may include a mixture of a lithium salt and a polymer, or include a polymer having an ionically-conductive functional group. For example, in one or more embodiments, the polymer solid electrolyte may be a polymer electrolyte that is in a solid state at 25 °C and 1 atm. In some embodiments, the polymer solid electrolyte may not contain liquid.

For example, in one or more embodiments, the polymer gel electrolyte may include a liquid electrolyte and a polymer, or an organic solvent and a polymer having an ionically-conductive functional group. The liquid electrolyte may be, for example, an ionic liquid, a mixture of a lithium salt and an ionic liquid, a mixture of a lithium salt and an organic solvent, a mixture of an ionic liquid and an organic solvent, or a mixture of lithium salt, an ionic liquid, and an organic solvent. For example, in some embodiments, the polymer gel electrolyte may be a polymer electrolyte that is in a gel state at 25 °C and 1 atm. For example, in some embodiments, the polymer gel electrolyte may have a gel state without containing liquid. An ionic liquid in the sense of the present invention is a compound that consists of ions and has a melting point of 100°C or below.

The lithium salt utilized in the polymer gel electrolytes and/or liquid electrolytes are not limited, and may utilize any material available as a lithium salt of electrolytes in the art. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are each an integer of 1 to 20), LiCl, Lil, or a mixture thereof.

For example, the polymer electrolyte may include a polymer including a repeat unit having a heat-polymerizable functional group, a thermoset product of the polymer, an oligomer including a repeat unit having a heat-polymerizable functional group, a thermoset product of the oligomer, a monomer having a heat-polymerizable functional group, a thermoset product of the monomer, an oligomeric ionic liquid, a polymeric ionic liquid, or any combination thereof.

The polymer including a repeat unit having a heat-polymerizable functional group, the thermoset product of the polymer, and the oligomer including a repeat unit having a heat-polymerizable functional group may each further include a repeat unit not having a heat-polymerizable functional group. The repeat unit not having a heat-polymerizable functional group is not limited and may be any repeat unit derived from an unsaturated group-containing monomer that is commonly utilized in the manufacture of a copolymer in the art. For example, the repeat unit not having a heat-polymerizable functional group may be an acryl-based monomer, such as methyl acrylate and/or ethyl acrylate.

The heat-polymerizable functional group may include, for example, a cyano group, a hydroxy group, an amino group, an amide group, an imide group, a carboxyl group, an acid anhydride group, or any combination thereof.

Non-limiting examples of the polymer including a repeat unit having a heat-polymerizable functional group, and/or an oligomer including a repeat unit having a heat-polymerizable functional group may include a repeat unit derived from a cyano group, a repeat unit derived from a hydroxy group, a repeat unit derived from an acid anhydride group, a repeat unit derived from an amino group, a repeat unit derived from an amide group, a repeat unit derived from an imide group, a repeat unit derived from a carboxyl group, or any combination thereof. The monomer having a heat-polymerizable functional group may include, for example, a cyano group-containing monomer, a hydroxy group-containing monomer, an amino group-containing monomer, an amide group-containing monomer, an imide group-containing monomer, a carboxyl group-containing monomer, an acid anhydride group-containing monomer, or any combination thereof.

Non-limiting examples of the cyano group-containing monomer may include nitrile-based monomers of unsaturated carboxylic acid, such as acrylonitrile, methacrylonitrile, and vinylidene cyanide; cyanoalkyl ester-based monomers of unsaturated carboxylic acid, such as 2-cyanoethyl(meth)acrylate, 2-cyanopropyl(meth)acrylate, and 3-cyanopropyl(meth)acrylate; and CH=CH-C(=O)-(OCH₂CH₂)ₙ-CN (n=1 to 20), and/or the like.

Non-limiting examples of the hydroxy group-containing monomer may be hydroxy alkyl methacrylate ester-based monomers, such as 2-hydroxyethyl methacrylate, 2-hydroxypropyl methacrylate, 3-hydroxypropyl methacrylate, 2-hydroxybutyl methacrylate, 3-hydroxybutyl methacrylate, and 4-Hydroxybutyl methacrylate.

Non-limiting examples of the amino group-containing monomer may include amino alkyl ester-based monomers of unsaturated carboxylic acid, such as aminomethyl(meth)acrylate, methylaminomethyl(meth)acrylate, dimethylaminomethyl(meth)acrylate, 2-aminoethyl(meth)acrylate, 2-methylaminoethyl(meth)acrylate, 2-ethylaminoethyl(meth)acrylate, 2-dimethylaminoethyl(meth)acrylate, 2-diethylaminoethyl(meth)acrylate, 2-n-propylaminoethyl(meth)acrylate, 2-n-butylaminoethyl(meth)acrylate, 2-aminopropyl(meth)acrylate, 2-methylaminopropyl(meth)acrylate, 2-dimethylaminopropyl(meth)acrylate, 3-aminopropyl(meth)acrylate, 3-methylaminopropyl(meth)acrylate, and 3-dimethylaminopropyl(meth)acrylate.

Non-limiting examples of the amide group-containing monomer may include unsaturated carboxylic acid amide-based monomers, such as (meth)acrylamide, α-chloroacrylamide, N,N'-methylene bis(meth)acrylamide, N,N'-ethylenebis(meth)acrylamide, N-hydroxymethyl(meth)acrylamide, N-2-hydroxyethyl(meth)acrylamide, N-2-hydroxypropyl(meth)acrylamide, N-3-hydroxypropyl(meth)acrylamide, crotonic acid amide, maleic acid diamide, fumaric acid diamide, and diacetone acrylamide; and unsaturated carboxylic acid amide-based monomers, such as N-dimethylaminomethyl(meth)acrylamide, N-2-aminoethyl(meth)acrylamide, N-2-methylaminoethyl(meth)acrylamide, N-2-ethylaminoethyl(meth)acrylamide, N-2-dimethylaminoethyl(meth)acrylamide, N-2-diethylaminoethyl(meth)acrylamide, N-3-aminopropyl(meth)acrylamide, N-3-methylaminopropyl(meth)acrylamide, and N-3-dimethylaminopropyl(meth)acrylamide.

The imide group-containing monomer may be, for example, cyclohexylmaleimide, isopropylmaleimide, N-cyclohexylmaleimide, itaconimide, and/or the like.

Non-limiting examples of the carboxyl group-containing monomer may include: unsaturated monocarboxylic acid-based monomers such as (meth)acrylic acid and crotonic acid; unsaturated polycarboxylic acid-based monomers such as maleic acid, fumaric acid, itaconic acid, citraconic acid, and mesaconic acid; and free carboxyl group-containing alkyl ester-based monomers or free carboxyl group-containing amide-based monomers of the unsaturated polycarboxylic acid.

Non-limiting examples of the carboxylic anhydride group-containing monomer may include acid anhydrides of the unsaturated polycarboxylic acid described above, and/or the like.

A thermoset product of a polymer including a repeat unit having a heat-polymerizable functional group, a thermoset product of an oligomer including a repeat unit having a heat-polymerizable functional group, and a thermoset product of a monomer having a heat-polymerizable functional group may each be obtained by performing a heat treatment on a polymer including a repeat unit having a heat-polymerizable functional group, an oligomer including a repeat unit having a heat-polymerizable functional group, and a monomer having a heat-polymerizable functional group, respectively, at about 50 °C to about 200 °C, about 50 °C to about 150 °C, about 50 °C to about 100 °C, or about 50 °C to about 70 °C. A duration of the heat treatment may be, for example, about 1 minute to about 120 minutes, about 5 minutes to about 100 minutes, about 10 minutes to about 80 minutes, or about 30 minutes to about 80 minutes.

The oligomeric ionic liquid and the polymeric ionic liquid may be, for example, a product of polymerization of ionic liquid monomers.

For example, the ionic liquid monomers may be selected from among unsaturated monomers including: a) one or more cations selected from among ammonium, pyrrolidinium, pyridinium, pyrimidinium, imidazolium, piperidinium, pyrazolium, oxazolium, pyridazinium, phosphonium, sulfonium, triazolium, and a mixture thereof; and b) one or more anions selected from among BF₄⁻, PF₆⁻, AsF₆⁻, SbF₆⁻, AlCl₄⁻, HSO₄⁻, ClO4⁻, CH₃SO₃⁻, CF₃CO₂⁻, Cl⁻, Br⁻, I⁻, SO₄²⁻, CF₃SO₃⁻, (FSO₂)₂N⁻, (C₂F₅SO₂)₂N⁻, (C₂F₅SO₂)(CF₃SO₂)N⁻, and (CF₃SO₂)2N⁻. By polymerization of such ionic liquid monomers, an oligomeric ionic liquid or a polymeric ionic liquid may be obtained.

In one or more embodiments, the organic electrolyte 100 may include, for example, a liquid electrolyte, wherein the viscosity of the liquid electrolyte may be, for example, 10 cps or more, 15 cps or more, 20 cps or more, 25 cps or more, or 30 cps or more, at 25 °C and 1 atm. The viscosity of the liquid electrolyte may be, for example, 10 cps to 1000 cps, 15 cps to 500 cps, 20 cps to 400 cps, 25 cps to 200 cps, or 30 cps to 100 cps, at 25 °C and 1 atm. The viscosity of the liquid electrolyte may be, for example, 10 cps to 1000 cps, 10 cps to 500 cps, 10 cps to 400 cps, 10 cps to 200 cps, or 10 cps to 100 cps, at 25 °C and 1 atm. The viscosity of a liquid electrolyte may be measured utilizing LV DV-II + Pro Viscometer (cone-plate type or kind) manufactured by Brookfield. Because the liquid electrolyte has a high viscosity in the above ranges, volume changes of the cathode layer 10 and/or the anode layer 20 during charging and discharging may be more effectively accommodated, interfacial resistances at interfaces between the cathode layer 10, the anode layer 20, and the solid electrolyte layer 30 may be more effectively reduced, and improved adhesion between the cathode layer 10, the anode layer 20, and the solid electrolyte layer 30 may be provided. As a result, the cycling performance of the solid secondary battery 1 may improve. When the viscosity of the liquid electrolyte is excessively low, the aforementioned effects may be insignificant.

In one or more embodiments, the liquid electrolyte may include, for example, an ionic liquid.

The ionic liquid may be represented by, for example, Formulas 1 or 2:

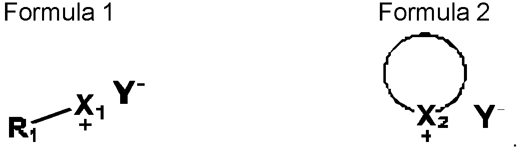

In Formula 1, X₁ may be -N(R₂)(R₃)(R₄) or -P(R₂)(R₃)(R₄),
R₁, R₂, R₃, and R₄ may each independently be a C1-C30 alkyl group unsubstituted or substituted with a halogen, a C1-C30 alkoxy group unsubstituted or substituted with a halogen, a C6-C30 aryl group unsubstituted or substituted with a halogen, a C6-C30 aryloxy group unsubstituted or substituted with a halogen, a C3-C30 heteroaryl group unsubstituted or substituted with a halogen,
a C3-C30 heteroaryloxy group unsubstituted or substituted with a halogen, a C4-C30 cycloalkyl group unsubstituted or substituted with a halogen, a C3-C30 heterocycloalkyl group unsubstituted or substituted with a halogen, or a C2-C100 alkylene oxide group unsubstituted or substituted with a halogen.

In Formula 2, 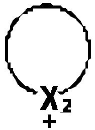 may be a heteroaryl ring or a heterocycloalkyl ring, containing 1 to 3 heteroatoms and 2 to 30 carbon atoms, wherein the ring may be unsubstituted or substituted with substituents, X₂ may be =N(R₅)(R₆), -N(R₅)=, =P(R₅)(R₆) or -P(Rs)=.

The substituents substituted in the ring, R₅, and R₆ may each independently be hydrogen, a C1-C30 alkyl group unsubstituted or substituted with a halogen, a C1-C30 alkoxy group unsubstituted or substituted with a halogen, a C6-C30 aryl group unsubstituted or substituted with a halogen, a C6-C30 aryloxy group unsubstituted or substituted with a halogen, a C3-C30 heteroaryl group unsubstituted or substituted with a halogen, a C3-C30 heteroaryloxy group unsubstituted or substituted with a halogen, a C4-C30 cycloalkyl group unsubstituted or substituted with a halogen, a C3-C30 heterocycloalkyl group unsubstituted or substituted with a halogen, or a C2-C100 alkylene oxide group unsubstituted or substituted with a halogen, and Y⁻ may be an anion.

In some embodiments, the ionic liquid may be represented by, for example, Formulas 3 and 4:

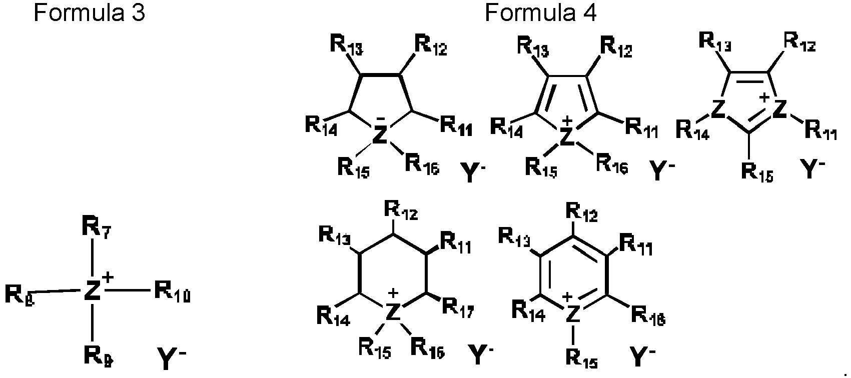

In Formula 3, Z may be N or P,
R₇, R₈, R₉, and R₁₀ may each independently be a C1-C30 alkyl group unsubstituted or substituted with a halogen, a C6-C30 aryl group unsubstituted or substituted with a halogen, a C3-C30 heteroaryl group unsubstituted or substituted with a halogen, a C4-C30 cycloalkyl group unsubstituted or substituted with a halogen, or a C3-C30 heterocycloalkyl group unsubstituted or substituted with a halogen.

In Formula 4, Z may be N or P,
R₁₁, R₁₂, R₁₃, R₁₄, R₁₅, R₁₆, and R₁₇ may each independently be hydrogen, a C1-C30 alkyl group unsubstituted or substituted with a halogen, a C6-C30 aryl group unsubstituted or substituted with a halogen, a C3-C30 heteroaryl group unsubstituted or substituted with a halogen, a C4-C30 cycloalkyl group unsubstituted or substituted with a halogen, or a C3-C30 heterocycloalkyl group unsubstituted or substituted with a halogen, and Y⁻ may be an anion.

In some embodiments, the ionic liquid may be represented by, for example, Formulas 5 to 10:

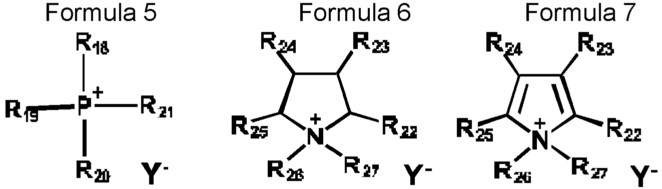

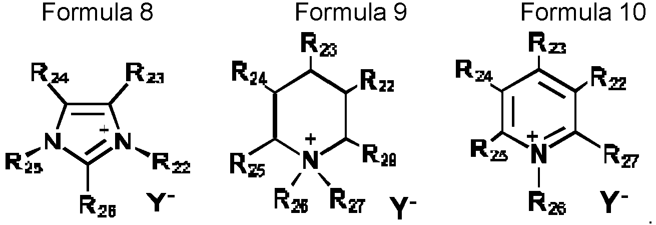

In Formulas 5 to 10, R₁₈, R₁₉, R₂₀, and R₂₁ may each independently be a C1-C30 alkyl group unsubstituted or substituted with a halogen, a C6-C30 aryl group unsubstituted or substituted with a halogen, a C3-C30 heteroaryl group unsubstituted or substituted with a halogen, a C4-C30 cycloalkyl group unsubstituted or substituted with a halogen, or a C3-C30 heterocycloalkyl group unsubstituted or substituted with a halogen, and
R₂₂, R₂₃, R₂₄, R₂₅, R₂₆, and R₂₇ may each independently be hydrogen, a C1-C30 alkyl group unsubstituted or substituted with a halogen, a C6-C30 aryl group unsubstituted or substituted with a halogen, a C3-C30 heteroaryl group unsubstituted or substituted with a halogen, a C4-C30 cycloalkyl group unsubstituted or substituted with a halogen, or a C3-C30 heterocycloalkyl group unsubstituted or substituted with a halogen, and Y⁻ may be an anion.

The ionic liquid may include an anion, and the anion may include, for example, BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, SO₄²⁻, BOB⁻(bis(oxalate)borate), CF₃SO₃⁻, (FSO₂)₂N⁻, (C₂F₅SO₂)₂N⁻, (C₂F₅SO₂)(CF₃SO₂)N⁻, (CF₃SO₂)₂N⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, C₂N₃⁻, (O(CF₃)₂C₂(CF₃)₂O)₂PO⁻, (FSO₂)₂N⁻, (CF₃SO₂)₂N^{-,} or any combination thereof. The anions of the ionic liquids represented by Formulas 1 to 10 may also be selected from among the anions described above.

For example, in one or more embodiments, the ionic liquid may include 1-methyl-1-propylpyrrolidinium bis(fluorosulfonyl)imide), 1-methyl-1-butylpyrrolidinium bis(fluorosulfonyl)imide), 1-methyl-1-propylpyrrolidinium bis(trifluoromethanesulfonyl)imide, 1-methyl-1-butylpyrrolidinium bis(trifluoromethanesulfonyl)imide, or any combination thereof.

For example, in one or more embodiments, the ionic liquid may have a molecular weight of 1,000 Dalton or less, 900 Dalton or less, 800 Dalton or less, or 500 Dalton or less.

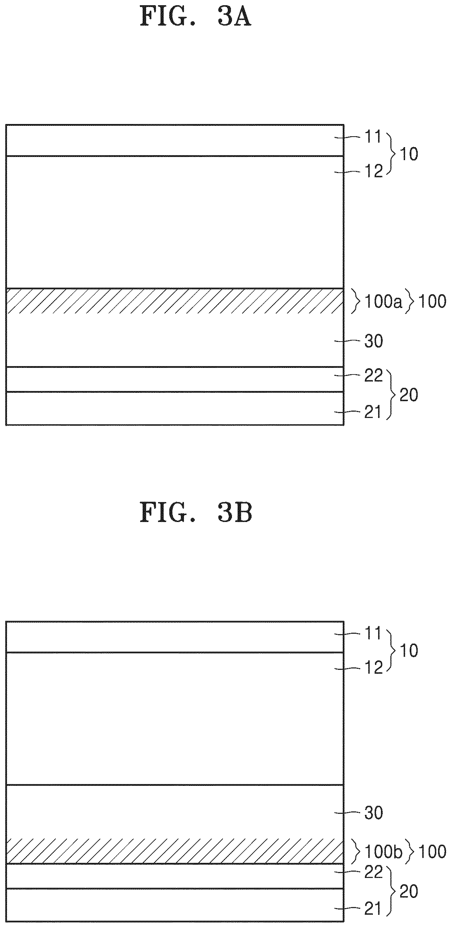

Referring to FIGs. 3A to 3C, in one or more embodiments, the solid electrolyte layer 30 may further include at least one of a first organic electrolyte or a second organic electrolyte, disposed in an inner solid electrolyte layer 30c (e.g., in a solid electrolyte layer interior 30c).

Referring to FIG. 3A, in some embodiments, the solid electrolyte layer 30 may include a first organic electrolyte 100a, which is disposed on one surface 30a of the solid electrolyte and extending to the solid electrolyte layer interior 30c from the one surface 30a. Because the first organic electrolyte 100a is disposed both (e.g., simultaneously) on an interface of the solid electrolyte layer 30 and the cathode layer 10 and in the solid electrolyte layer interior 30c, an interfacial resistance of the solid electrolyte layer 30 and the cathode layer 10 may further decrease, and the solid electrolyte layer 30 may further easily accommodate volume changes of the cathode layer 10. In one or more embodiments, the first organic electrolyte 100a may be disposed extending, in a direction from the one surface 30a of the solid electrolyte layer to the anode layer 20, to a region that corresponds to 50 % or less, 40 % or less, 30 % or less, 20 % or less, or 10 % or less, with respect to a total thickness of the solid electrolyte layer 30.

Referring to FIG. 3B, in some embodiments, the solid electrolyte layer 30 may include a second organic electrolyte 100b, which is disposed on the other surface 30b of the solid electrolyte and extending to the solid electrolyte layer interior 30c from the other surface 30b. Because the second organic electrolyte 100b is disposed both (e.g., simultaneously) on an interface of the solid electrolyte layer 30 and the anode layer 20 and in the solid electrolyte layer interior 30c, an interfacial resistance of the solid electrolyte layer 30 and the anode layer 20 may further decrease, and the solid electrolyte layer 30 may further easily accommodate volume changes of the anode layer 20. In one or more embodiments, the second organic electrolyte 100b may be disposed extending, in a direction from the other surface 30b to the cathode layer 10, to a region that corresponds to 50 % or less, 40 % or less, 30 % or less, 20 % or less, or 10 % or less, with respect to a total thickness of the solid electrolyte layer 30.

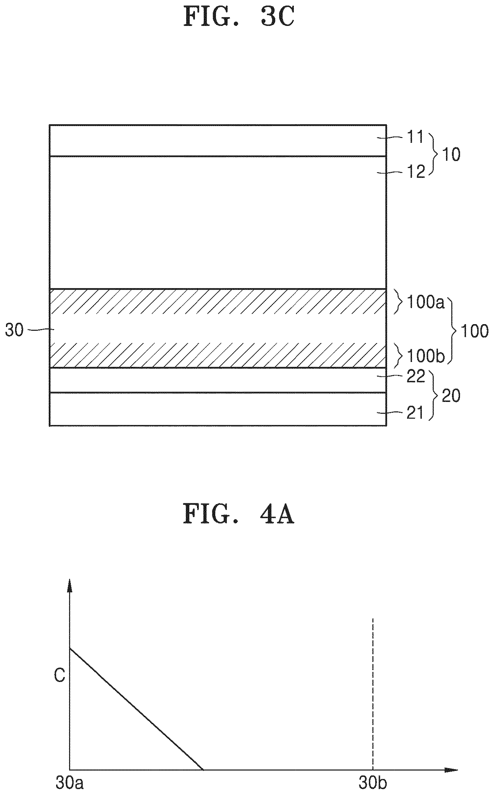

Referring to FIG. 3C, in some embodiments, the solid electrolyte layer 30 may include both (e.g., simultaneously) the first organic electrolyte 100a disposed on the one surface 30a of the solid electrolyte and extending from the one surface 30a to the solid electrolyte layer interior 30c, and also the second organic electrolyte 100b disposed on the other surface 30b of the solid electrolyte and extending from the other surface 30b to the solid electrolyte layer interior 30c. Because the first organic electrolyte 100a is disposed at the interface between the solid electrolyte layer 30 and the cathode layer 10 and in the solid electrolyte layer interior 30c, and the second organic electrolyte 100b is disposed at the interface between the solid electrolyte layer 30 and the anode layer 20 and in the solid electrolyte layer interior 30c, the interfacial resistance of the solid electrolyte layer 30 and the cathode layer 10, and the interfacial resistance of the solid electrolyte layer 30 and the anode layer 20 may further decrease, and the solid electrolyte layer 30 may more effectively accommodate volume changes of the cathode layer 10 and the anode layer 20. The first organic electrolyte 100a and the second organic electrolyte 100b may each be disposed extending, in a direction from the one surface 30a of the solid electrolyte layer and in a direction from the other surface 30b of the solid electrolyte layer, to a region that corresponds to 50 % or less, 40 % or less, 30 % or less, 20 % or less, or 10 % or less, with respect to a total thickness of the solid electrolyte layer 30, respectively.

The solid electrolyte may include one surface 30a and the other surface 30b opposite (facing away from) the one side 30a. The one surface 30a of the solid electrolyte layer may be adjacent to the cathode layer 10, and the other surface 30b of the solid electrolyte layer may be adjacent to the anode layer 20. The one surface 30a of the solid electrolyte layer may be in contact with, for example, the cathode layer 10. The other surface 30b of the solid electrolyte layer may be in contact with, for example, the anode layer 20.

FIGs. 4A to 4C illustrate a concentration C of organic electrolytes included in the solid electrolyte layer 30 over location from the one surface 30a of the solid electrolyte layer to the other surface 30b of the solid electrolyte layer according to one or more embodiments of the present disclosure.

Referring to FIG. 4A, in some embodiments, the solid electrolyte layer 30 may have a concentration gradient of the first organic electrolyte 100a that decreases in a direction from the one surface 30a of the solid electrolyte layer to the anode layer 20. In one or more embodiments, the concentration gradient of the first organic electrolyte 100a may decrease with one or more suitable gradients, for example. The concentration gradient of the first organic electrolyte 100a may decrease with a constant gradient, or may decrease with a varying gradient. The concentration of the first organic electrolyte 100a may, for example, continuously decrease, or decrease in a discontinuous manner from the one surface 30a of the solid electrolyte layer to the other surface 30b of the solid electrolyte layer. For example, if (e.g., when) the solid electrolyte layer 30 has a multilayer structure, then the concentration of the first organic electrolyte 100a may decrease in a stepwise manner from the one surface 30a of the solid electrolyte layer to the other surface 30b of the solid electrolyte layer. With the solid electrolyte layer 30 having the above concentration gradient of the first organic electrolyte 100a, volume changes of the cathode layer 10 may be more effectively accommodated in areas with a high concentration of the first organic electrolyte 100a, and improved structural stability may be provided in areas with low or zero concentration of the first organic electrolyte 100a.

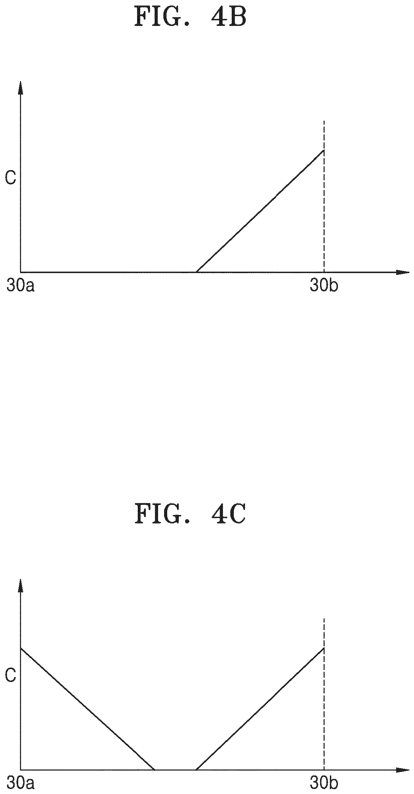

Referring to FIG. 4B, in some embodiments, the solid electrolyte layer 30 may have a concentration gradient of the second organic electrolyte 100b that decreases in a direction from the other surface 30b of the solid electrolyte layer to the cathode layer 10. In one or more embodiments, the concentration gradient of the second organic electrolyte 100b may decrease with varying degree of steepness, for example. The concentration gradient of the second organic electrolyte 100b may decrease with a constant gradient, or may decrease with a varying gradient. The concentration of the second organic electrolyte 100b may, for example, continuously decrease, or decrease in a discontinuous manner from the other surface 30b of the solid electrolyte layer to the one surface 30a of the solid electrolyte layer. For example, if (e.g., when) the solid electrolyte layer 30 has a multilayer structure, then the concentration of the second organic electrolyte 100b may decrease in a stepwise manner from the other surface 30b of the solid electrolyte layer to the one surface 30a of the solid electrolyte layer. With the solid electrolyte layer 30 having the above concentration gradient of the second organic electrolyte 100b, volume changes of the anode layer 20 may be more effectively accommodated in areas with a high concentration of the second organic electrolyte 100b, and improved structural stability may be provided in areas with low or zero concentration of the second organic electrolyte 100b.

Referring to FIG. 4C, in some embodiments, the solid electrolyte layer 30 may concurrently (e.g., simultaneously) have a concentration gradient of the first organic electrolyte 100a that decreases in a direction from the one surface 30a of the solid electrolyte layer to the anode layer 20, and a concentration gradient of the second organic electrolyte 100b that decreases in a direction from the other surface 30b of the solid electrolyte layer to the cathode layer 10. In one or more embodiments, the concentration gradient of the first organic electrolyte 100a and the concentration gradient of the second organic electrolyte 100b may decrease with one or more suitable gradients, for example. The concentration gradient of the first organic electrolyte 100a and the concentration gradient of the second organic electrolyte 100b may decrease with a constant gradient, or may decrease with a varying gradient. The concentration of the first organic electrolyte 100a may continuously decrease (in a smooth or continuous manner) or decrease in a discontinuous manner, from the one surface 30a of the solid electrolyte layer to the other surface 30b of the solid electrolyte layer, and the concentration of the second organic electrolyte 100b may continuously decrease or decrease in a discontinuous manner, from the other surface 30b of the solid electrolyte layer to the one surface 30a of the solid electrolyte layer, for example. In some embodiments, if (e.g., when) the solid electrolyte layer 30 has a multilayer structure, then the concentration of the first organic electrolyte 100a and the concentration of the second organic electrolyte 100b may, for example, decrease in a stepwise manner from the one surface 30a and the other surface 30b of the solid electrolyte layer, respectively, to the solid electrolyte layer interior 30c. With the solid electrolyte layer 30 having the above concentration gradient of the first organic electrolyte 100a and the above concentration gradient of the second organic electrolyte 100b, volume changes of the cathode layer 10 and the anode layer 20 may be more effectively accommodated in areas with high concentrations of the first organic electrolyte 100a and the second organic electrolyte 100b, and improved structural stability may be provided in areas with low or zero concentration of the first organic electrolyte 100a and the second organic electrolyte 100b, e.g., the center area of the solid electrolyte layer 30.

### Solid Electrolyte Layer: Solid Electrolyte

Referring to FIGs. 1A-1C, 2A-2C, 3A-3C, 4A-4C, and 5 to 9, in one or more embodiments, the solid electrolyte layer 30 may be between the cathode layer 10 and the anode layer 20, and include a solid electrolyte. The solid electrolyte may include, for example, an inorganic solid electrolyte.

For example, in one or more embodiments, the solid electrolyte may include a sulfide-based solid electrolyte, an oxide-based solid electrolyte, or any combination thereof.

In some embodiments, the solid electrolyte may be, for example, a sulfide-based solid electrolyte. The sulfide-based solid electrolyte may be, for example, at least one selected from among: Li₂S-P₂S₅; Li₂S-P₂S₅-LiX, wherein X is a halogen element; Li₂S-P₂S₅-Li₂O; Li₂S-P₂S₅-Li₂O-Lil; Li₂S-SiS₂; Li₂S-SiS₂-Lil; Li₂S-SiS₂-LiBr; Li₂S-SiS₂-LiCl; Li₂S-SiS₂-B₂S₃-Lil; Li₂S-SiS₂-P₂S₅-Lil; Li₂S-B₂S₃; Li₂S-P₂S₅-ZₘSₙ, wherein m and n are each a positive number, and Z is Ge, Zn or Ga; Li₂S-GeS₂; Li₂S-SiS₂-Li₃PO₄; and Li₂S-SiS₂-LiₚMO_{q}, wherein p and q are each a positive number, and M is P, Si, Ge, B, Al, Ga or In; Li₇₋ₓPS₆₋ₓClₓ, wherein 0≤x≤2; Li₇₋ₓPS₆₋ₓBrₓ, wherein 0≤x≤2; and Li₇₋ₓPS₆₋ₓIₓ, wherein 0≤x≤2. The sulfide-based solid electrolyte may be prepared by treating starting materials, such as Li₂S and P₂S₅, by a method such as melt-quenching, mechanical milling, and/or the like. Following such a treatment, heat treatment may be conducted. The sulfide-based solid electrolyte may be amorphous or crystalline, or may be in a mixed state thereof. In some embodiments, the solid electrolyte may be, among the sulfide-based solid electrolyte materials described herein, a material that contains at least sulfur (S), phosphorus (P), and lithium (Li), as its constitutive elements. For example, in some embodiments, the solid electrolyte may be a material including Li₂S-P₂S₅. If (e.g., when) a sulfide-based solid electrolyte material utilized to form the solid electrolyte contains Li₂S-P₂S₅, then a mixing molar ratio of Li₂S:P₂S₅ may be in a range of, for example, about 20:80 to about 90:10, about 25:75 to about 90:10, about 30:70 to about 70: 30, or about 40: 60 to about 60: 40.

For example, in one or more embodiments, the sulfide-based solid electrolyte may include an argyrodite-type or kind solid electrolyte represented by Formula 11:

**Formula 11** Li⁺₁₂₋ₙ₋ₓAⁿ⁺X²⁻₆₋ₓY⁻ₓ.

In Formula 11, A may be P, As, Ge, Ga, Sb, Si, Sn, Al, In, Ti, V, Nb, or Ta, X may be S, Se, or Te, Y may be Cl, Br, I, F, CN, OCN, SCN, or N₃, and 1≤n≤5 and 0≤x≤2 may be satisfied. For example, in some embodiments, the sulfide-based solid electrolyte may be an argyrodite-type or kind compound including one or more selected from among Li₇₋ₓPS₆₋ₓClₓ wherein 0≤x≤2, Li₇₋ₓPS₆₋ₓBrₓ wherein 0≤x≤2, and Li₇₋ₓPS₆₋ₓIₓ wherein 0≤x≤2. For example, in some embodiments, the sulfide-based solid electrolyte may be an argyrodite-type or kind compound including at least one selected from among Li₆PS₅Cl, Li₆PS₅Br, and LisPSsl.

The argyrodite-type or kind solid electrolyte may have a density of about 0.1 g/cc to about 2.0 g/cc, about 0.5 g/cc to about 2.0 g/cc, about 1.0 g/cc to about 2.0 g/cc, or about 1.5 g/cc to about 2.0 g/cc. As the argyrodite-type or kind solid electrolyte has a density in the above ranges, internal resistance of the solid secondary battery 1 may be reduced, and Li penetration to the solid electrolyte layer may be more effectively suppressed or reduced.

For example, the oxide-based all-solid electrolyte may be Li_{1+x+y}AlₓTi₂₋ₓSi_{y}P_{3-y}O₁₂(0<x<2 and 0≤y<3), BaTiO₃, Pb(Zr,Ti)O₃(PZT), Pb₁₋ₓLaₓZr_{1-y} Ti_{y}O₃(PLZT) (0≤x<1, 0≤y<1 ), Pb(Mg₃Nb_{2/3})O₃-PbTiO₃(PMN-PT), HfO₂, SrTiOs, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2 and 0<y<3), LiₓAl_{y}Ti_{z}(PO₄)₃ (0<x<2, 0<y<1, and 0<z<3), Li_{1+x+y}(Al, Ga)ₓ(Ti, Ge)₂₋ₓSi_{y}P_{3-y}O₁₂ (0≤x≤1 and 0≤y≤1 ), LiₓLa_{y}TiO₃ (0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (M = Te, Nb, or Zr, and 0≤x≤10), or any combination thereof. The oxide-based solid electrolyte is produced, for example, by a sintering method and/or the like.

For example, in some embodiments, the oxide-based solid electrolyte may be a garnet-type or kind solid electrolyte selected from among Li₇La₃Zr₂O₁₂ (LLZO) and Li₃₊ₓLa₃Zr₂₋ₐMₐO₁₂ (M doped LLZO, M=Ga, W, Nb, Ta, or Al, and 0<a<2 and 0≤x≤10).

The solid electrolyte layer 30 may be impermeable to lithium polysulfides. Therefore, side reactions between an anode layer and lithium polysulfides generated upon cycling of a sulfide-based cathode active material may be inhibited. As a result, the cycling performance of the solid secondary battery 1 including the solid electrolyte layer 30 may improve.

### Solid Electrolyte Layer: Binder

In one or more embodiments, the solid electrolyte layer 30 may further include, for example, a binder. Non-limiting examples of the binder included in the solid electrolyte layer 30 may include styrene butadiene rubber (SBR), polytetrafluoroethylene, polyvinylidene fluoride, polyethylene, and/or the like. However, the binder is not limited to the aforementioned examples and may be any binder available in the art. The binder in the solid electrolyte layer 30 may be identical to or different from a binder included in the cathode active material layer 12 and the anode active material layer 22. In some embodiments, the binder may not be provided.

An amount of the binder included in the solid electrolyte layer 30 may be, about 0 wt% to about 10 wt%, about 0 wt% to about 5 wt%, about 0 wt% to about 3 wt%, about 0 wt% to about 1 wt%, about 0 wt% to about 0.5 wt%, or about 0 wt% to about 0.1 wt%, relative to the total weight of the solid electrolyte layer 30.

### Cathode Layer

### Cathode Layer: Cathode Active Material

Referring to FIGS. 1A-1C, 2A-2C, 3A-3C, 4A-4C, and 5 to 9, in one or more embodiments, a cathode layer 10 may include a cathode current collector 11; and a cathode active material layer 12 on at least one surface (e.g., one surface or both (two opposite) surfaces) of the cathode current collector 11. The cathode active material layer 12 may include a Li₂S-containing composite as a cathode active material.

With 100 parts by weight of the cathode active material layer 12, the Li₂S-containing composite may be included in an amount of about 10 parts by weight to about 90 parts by weight, about 30 parts by weight to about 90 parts by weight, about 40 parts by weight to about 90 parts by weight, about 40 parts by weight to about 80 parts by weight, 50 parts by weight to about 80 parts by weigh, or about 50 parts by weight to about 70 parts by weight. If (e.g., when) the amount of the Li₂S-containing composite excessively decreases, then the energy density of the secondary battery may deteriorate. If (e.g., when) the amount of the Li₂S-containing composite excessively increases, then degradation of the cathode by volume changes of the cathode during charging and discharging may be accelerated. As a result, the cycling performance of the secondary battery 1 may deteriorate.

In one or more embodiments, the Li₂S-containing composite may include, for example, a composite of Li₂S and a carbonaceous material, a composite of Li₂S, a carbonaceous material, and a solid electrolyte, a composite of Li₂S and a solid electrolyte, a composite of Li₂S, a carbonaceous material, and a lithium salt, a composite of Li₂S and a lithium salt, a composite of Li₂S and a metal carbide, a composite of Li₂S, a carbonaceous material, and a metal carbide, a composite of Li₂S and a metal nitride, a composite of Li₂S, a carbonaceous material, and a metal nitride, or any combination thereof.

The Li₂S-containing composite may be distinguished from a simple mixture of Li₂S and other materials. Because the interfacial resistance between Li₂S and other materials are maintained in a simple mixture of Li₂S and other materials, the internal resistance of a cathode including the simple mixture may remain high. For example, the cycling performance of a solid secondary battery 1 including the simple mixture may deteriorate. In some embodiments, as Li₂S and other materials in the Li₂S-containing composite are mechanochemically or chemically complexed (e.g., form a complex), the interfacial resistance between Li₂S and the other materials decreases, which leads to a decrease in the internal resistance of a cathode including the Li₂S-containing composite. For example, the cycling performance of a solid secondary battery 1 including the Li₂S-containing composite may improve.

The composite of Li₂S and a carbonaceous material may include a carbonaceous material, in addition to Li₂S. The carbonaceous material may be, for example, any material containing carbon atoms and utilized as a conductive material in the art. The carbonaceous material may be, for example, crystalline carbon, amorphous carbon, or any combination thereof. In some embodiments, the carbonaceous material may be, for example, a fired product of a carbon precursor. In some embodiments, the carbonaceous material may be, for example, a carbon nanostructure. In some embodiments, the carbon nanostructure may be, for example, a one-dimensional carbon nanostructure, a two-dimensional carbon nanostructure, a three-dimensional carbon nanostructure, or any combination thereof. In some embodiments, the carbon nanostructure may be, for example, carbon nanotubes, carbon nanofibers, carbon nanotubes, carbon nanorods, graphene, or any combination thereof. In some embodiments, the carbonaceous material may be, for example, a porous carbonaceous material or a non-porous carbonaceous material. The porous carbonaceous material may contain, for example, periodic, regular two-dimensional or three-dimensional pores. The porous carbonaceous material may be, for example, carbon black such as Ketjen black, acetylene black, Denka black, thermal black, and/or channel black; graphite, activated carbon, or any combination thereof. The shape of the carbonaceous material may be a particulate form, a sheet form, a flake form, and/or the like, but without being limited thereto, may utilize any material available as carbonaceous material in the art. In one or more embodiments, the carbonaceous material may include, for example, a fibrous carbonaceous material. For example, the fibrous carbonaceous material may have an aspect ratio of about 2 to about 30, about 2 to about 20, about 2 to about 10, about 2 to about 8, about 2 to about 5, or about 2 to about 4. The fibrous carbonaceous material may include a fibrous carbon nanostructure. The fibrous carbon nanostructure may include, for example, carbon nanofibers, carbon nanotubes, carbon nanobelts, carbon nanorods, or any combination thereof.

The method of preparing the composite of Li₂S and a carbonaceous material may be a dry method, a wet method, or any combination thereof; however, the method is not limited thereto and may be any method available in the art. For example, the method of preparing the composite of Li₂S and a carbonaceous material may be milling, heat treatment, deposition, and/or the like; but the method is not necessarily limited thereto and may be any method available in the art.

In one or more embodiments, the composite of Li₂S, a carbonaceous material, and a solid electrolyte may include a carbonaceous material and a solid electrolyte, in addition to Li₂S. For details of the carbonaceous material, refer to the composite of Li₂S and a carbonaceous material described above. The solid electrolyte may be, for example, any material available as an ionically conductive material in the art. The solid electrolyte may be, for example, an inorganic solid electrolyte. The solid electrolyte may be, for example, a crystalline solid electrolyte, an amorphous solid electrolyte, or any combination thereof. In some embodiments, the solid electrolyte may be, for example, a sulfide-based solid electrolyte, an oxide-based solid electrolyte, or any combination thereof. The sulfide-based solid electrolyte may contain, for example, Li, S, and P, and may optionally further contain a halogen element. The sulfide-based solid electrolyte may be selected from among sulfide-based solid electrolytes that are utilized in a solid electrolyte layer. The sulfide-based solid electrolyte may have an ionic conductivity of 1×10⁻⁵ S/cm or more at room temperature, for example. The oxide-based solid electrolyte may contain, for example, Li, O, and a transition metal element, and may optionally further contain other elements. For example, the oxide-based solid electrolyte may be a solid electrolyte having an ionic conductivity of 1×10⁻⁵ S/cm or more at room temperature. The oxide-based solid electrolyte may be selected from among oxide-based solid electrolytes that are utilized in a solid electrolyte layer.

In one or more embodiments, the composite of Li₂S and solid electrolyte may include a solid electrolyte, in addition to Li₂S. For details of the solid electrolyte, refer to the composite of Li₂S, the carbonaceous material, and the solid electrolyte described above.

In one or more embodiments, the composite of Li₂S and a lithium salt may include Li₂S and a lithium salt. The lithium salt may be, for example, a binary compound or a ternary compound. The lithium salt may be a compound free of sulfur (S). For example, the lithium salt may be a binary compound consisting of a lithium salt and one element selected from among Groups 13 to 17 of the Periodic Table of the Elements. For example, the lithium salt may be a ternary compound consisting of a lithium salt and two elements selected from among Groups 13 to 17 of the Periodic Table of the Elements. non-limiting examples of the binary compound may include Lil, LiBr, LiCl, LiF, LiH, Li₂O, Li₂Se, Li₂Te, Li₃N, LisP, Li₃As, LisSb, Li₃Al₂, LiBs, or any combination thereof. Non-limiting examples of the ternary compound may include Li₃OCl, LiPF₆, LiBF₄, LiSbF₆, LiAsF₆, LiClO₄, LiAlO₂, LiAlCl₄, LiNOs, Li₂CO₃, LiBH₄, Li₂SO₄, Li₃BO₃, Li₃PO₄, Li₄NCl, Li₅NCl₂, Li₃BN₂, or any combination thereof. In one or more embodiments, the lithium salt may be at least one lithium halide compound selected from among LiF, LiCl, LiBr, and Lil. For example, the composite of Li₂S and a lithium salt may be a composite of Li₂S and a lithium halide. Because the composite of Li₂S and a lithium halide includes a lithium halide compound, further improved ionic conductivity may be provided. The composite of Li₂S and a lithium salt may be distinguished from a simple mixture of Li₂S and a lithium salt. Because the simple mixture of Li₂S and a lithium salt fails to maintain dense interfaces between Li₂S and the lithium salt, the simple mixture of Li₂S and a lithium salt provides high interfacial resistance and as a result, may cause deterioration of the lifespan characteristics of a solid secondary battery 1.

In one or more embodiments, the composite of Li₂S, a carbonaceous material, and a lithium salt may include a carbonaceous material and a lithium salt, in addition to Li₂S. For details of the carbonaceous material, refer to the composite of Li₂S and carbonaceous material described above. For details of the lithium salt, refer to the composite of Li₂S and a lithium salt, described above.

In one or more embodiments, the composite of Li₂S and a metal carbide may include a metal carbide, in addition to Li₂S. The metal carbide may be, for example, a two-dimensional metal carbide. The two-dimensional metal carbide may be represented by, for example, Mₙ₊₁CₙTₓ (M is a transition metal, T is a terminal group, T is O, OH, and/or F, n = 1, 2, or 3, and x is the number of terminal groups). The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, or any combination thereof. The surface of the two-dimensional metal carbide may be terminated by O, OH, and/or F.

In one or more embodiments, the composite of Li₂S, a carbonaceous material, and a metal carbide may include a carbonaceous material and a metal carbide, in addition to Li₂S. For details of the carbonaceous material, refer to the composite of Li₂S and carbonaceous material described above. For details of the metal carbide, refer to the composite of Li₂S and a metal carbide described above.

In one or more embodiments, the composite of Li₂S and a metal nitride may include a metal nitride, in addition to Li₂S. The metal nitride may be, for example, a two-dimensional metal nitride. The two-dimensional metal nitride may be represented by, for example, Mₙ₊₁NₙTₓ (M is a transition metal, T is a terminal group, T is O, OH, and/or F, n = 1, 2, or 3, and x is the number of terminal groups). The surface of the two-dimensional metal nitride may be terminated by O, OH, and/or F.

In one or more embodiments, the Li₂S-containing composite may be, for example, a composite of Li₂S, a lithium salt, and a carbonaceous material. In some embodiments, the Li₂S-containing composite may be, for example, a composite of Li₂S, a lithium salt, and a fibrous carbonaceous material.

For example, in one or more embodiments, with respect to 100 parts by weight of the composite of Li₂S, a lithium salt, and a carbonaceous material, about 10 parts by weight to about 80 parts by weight of Li₂S, about 1 part by weight to about 40 parts by weight of the lithium salt, and about 1 part by weight to about 20 parts by weight of the carbonaceous material may be included. For example, the amount of Li₂S included in the composite may be about 10 parts by weight to about 80 parts by weight, about 20 parts by weight to about 70 parts by weight, about 30 parts by weight to about 60 parts by weight, or about 40 parts by weight to about 60 parts by weight, with respect to 100 parts by weight of the composite. For example, the amount of the lithium salt included in the composite may be about 10 parts by weight to about 40 parts by weight, about 15 parts by weight to about 40 parts by weight, about 20 parts by weight to about 40 parts by weight, or about 25 parts by weight to about 35 parts by weight, with respect to 100 parts by weight of the composite. For example, the amount of the carbonaceous material included in the composite may be about 1 parts by weight to about 20 parts by weight, about 5 parts by weight to about 20 parts by weight, or about 5 parts by weight to about 15 parts by weight, with respect to 100 parts by weight of the composite. With the composite having the composition of Li₂S, a lithium salt, and a carbonaceous material in the above ranges, the solid secondary battery 1 including the composite may provide further improved ionic conductivity and/or electronic conductivity.

In one or more embodiments, the composite of Li₂S, a carbonaceous material, and a metal nitride may include a carbonaceous material and a metal nitride, in addition to Li₂S. For details of the carbonaceous material, refer to the composite of Li₂S and carbonaceous material described above. For details of the metal carbide, refer to the composite of Li₂S and a metal nitride described above.

In one or more embodiments, the cathode active material layer 12 may further include, for example, a sulfide-based compound distinguished from the cathode active materials described above. The sulfide-based compound may be, for example, a compound including sulfur and a metal element other than Li. In one or more embodiments, the sulfide-based compound may be, for example, a compound including sulfur and a metal element with an atomic weight of 10 or more, that belongs to Groups 1 to 14 in the Periodic Table of the Elements. The sulfide-based compound may be, for example, FeS₂, VS₂, NaS, MnS, FeS, NiS, CuS, or any combination thereof. As the cathode active material layer further includes a sulfide-based compound, the cycling performance of a solid secondary battery 1 may further improve. An amount of such a sulfide-based compound included in the cathode active material layer 12 may be 10 wt% or less, 5 wt% or less, 3 wt% or less, or 1 wt% or less, with respect to the total weight of the cathode active material layer 12.

### Cathode Layer: Solid Electrolyte

In one or more embodiments, the cathode active material layer 12 may further include, for example, a solid electrolyte. The solid electrolyte may be a sulfide-based solid electrolyte, for example. The solid electrolyte included in the cathode 10 may be identical to or different from a solid electrolyte included in a solid electrolyte layer 30. For details of the solid electrolyte, the description of the solid electrolyte layer 30 may be referred to.

In one or more embodiments, the solid electrolyte included in the cathode active material layer 12 may have a smaller median particle diameter D50 than that of the solid electrolyte included in the solid electrolyte layer 30. For example, in some embodiments, the median particle diameter D50 of the solid electrolyte included in the cathode active material layer 12 may be 90% or less, 80% or less, 70% or less, 60% or less, 50% or less, 40% or less, 30% or less, or 20% or less, relative to the median particle diameter D50 of the solid electrolyte included in the solid electrolyte layer 30. Average particle diameter D50 may be, for example, a median particle diameter (D50). Median particle diameter (D50) may refer to a particle size corresponding to a cumulative volume of 50 vol% as counted from the smallest particle size to the largest particle size in a particle size distribution measured by a laser diffraction method.

In one or more embodiments, with respect to 100 parts by weight of the cathode active material layer 12, the solid electrolyte may be included in an amount of about 10 parts by weight to about 60 parts by weight, about 10 parts by weight to about 50 parts by weight, about 20 parts by weight to about 50 parts by weight, or about 30 parts by weight to about 50 parts by weight. If (e.g., when) the amount of the solid electrolyte excessively decreases, then the internal resistance of the cathode increases, causing the cycling performance of the secondary battery 1 to deteriorate. If (e.g., when) the amount of the sulfide-based solid electrolyte excessively increases, then the energy density of the secondary battery 1 may decrease.

### Cathode Layer: Conductive Material

In one or more embodiments, the cathode active material layer 12 may further include a conductive material. The conductive material may be, for example, a carbonaceous conductive material, a metal-based conductive material, or any combination thereof. Non-limiting examples of the carbonaceous conductive material may include graphite, carbon black, acetylene black, Ketjen black, carbon fibers, and any combination thereof. However, the carbonaceous conductive material is not limited to the aforementioned examples and may be any material available as a carbonaceous conductive material in the art. The metal-based conductive material may be metal powder, metal fibers, or any combination thereof, but without being limited thereto, and may be any metal-based conductive material available in the art. For example, an amount of the conductive material included in the cathode active material layer 12 may be about 1 wt% to about 30 wt%, about 1 wt% to about 20 wt%, or about 1 wt% to about 10 wt%, with respect to the total weight of the cathode active material layer 12.

In one or more embodiments, the cathode active material layer may include a carbonaceous material, and the carbonaceous material may be disposed only in the composite cathode active material (e.g., in the Li₂S-containing composite). The cathode active material layer 12 may not contain any additional carbonaceous materials, other than the composite cathode active material provided with the carbonaceous material. Because the cathode active material layer does not contain any additional carbonaceous materials, the cathode and the secondary battery 1 may have improved energy density, and the manufacturing process thereof may be simplified.

### Cathode Layer: Binder

In one or more embodiments, the cathode active material layer 12 may further include a binder. The binder may be, for example, styrene butadiene rubber (SBR), polytetrafluoroethylene, polyvinylidene fluoride, polyethylene, and/or the like, but without being limited to the aforementioned examples, and may utilize any material utilized as a binder in the art. An amount of the binder included in the cathode active material layer 12 may be, for example, about 1 wt% to about 10 wt% with respect to the total weight of the cathode active material layer 12. In some embodiments, the binder may not be provided.

### Cathode Layer: Other Additives

In one or more embodiments, the cathode active material layer 12 may further include, for example, an additive such as a filler, a coating agent, a dispersing agent, and an ionically conductive aid, in addition to the cathode active material, the solid electrolyte, the binder, and the conductive material described above.

For the filler, coating agent, dispersing agent, and ion-conducting aid that may be included in the cathode active material layer 12, any suitable material generally utilized in an electrode of a solid secondary battery 1 may be utilized.

### Cathode Layer: Cathode Current Collector

For example, the cathode current collector 11 may utilize a plate, a foil, and/or the like, formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or any alloy thereof. In some embodiments, the cathode current collector 11 may not be provided. The cathode current collector 11 may have a thickness of, for example, about 1 µm to about 100 µm, about 1 µm to about 50 µm, about 5 µm to about 25 µm, or about 10 µm to about 20 µm.

For example, in some embodiments, the cathode current collector 11 may include a base film, and a metal layer on one side or both (e.g., simultaneously) sides of the base film. The base film may include, for example, a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or any combination thereof. For example, the base film may be an insulator. Because the base film includes an insulating thermoplastic polymer, the base film in the event of a short circuit may get softened or liquified, thereby blocking the battery operation and inhibiting a rapid increase in electric current. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), or any alloy thereof. In the event of an overcurrent, the metal layer may be disconnected, thus acting as an electrochemical fuse to provide protection against short circuits. A limiting current and a maximum current may be controlled or selected through controlling a thickness of the metal layer. The metal layer may be plated or deposited on the base film. As the thickness of the metal layer decreases, the limiting current and/or maximum current of the cathode current collector 11 decrease, and therefore, the stability of the lithium battery during a short circuit may improve. In one or more embodiments, a lead-tab may be added on the metal layer for connection to the outside. The lead-tab may be welded to the metal layer or a metal layer/base film laminate by ultrasonic welding, laser welding, spot welding, and/or the like. As the base film and/or the metal layer melt during welding, the metal layer may be electrically connected to the lead-tab. For stronger welding between the metal layer and the lead-tab, a metal chip may be added between the metal layer and the lead-tab. The metal chip may be a flake of the same material as the metal of the metal layer. For example, the metal chip may be a metal foil, a metal mesh, and/or the like. For example, the metal chip may be an aluminum foil, a copper foil, an SUS foil, and/or the like. By welding the metal layer with the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. A metal chip and/or a lead-tab may be further added on a part of the metal layer. For example, in one or more embodiments, the base film may have a thickness of about 1 µm to about 50 µm, about 1.5 µm to about 50 µm, about 1.5 µm to about 40 µm, or about 1 µm to about 30 µm. With the base film having a thickness within the above ranges, the weight of the electrode assembly may be more effectively reduced. For example, in one or more embodiments, the base film may have a melting point of about 100 °C to about 300 °C, about 100 °C to about 250 °C or less, or about 100 °C to about 200 °C. Because the base film has a melting point within the above ranges, the base film may easily melt and be bonded to the lead-tab while welding the lead-tab. To improve adhesion between the base film and the metal layer, in some embodiments, a surface treatment such as corona treatment may be performed on the base film. For example, in one or more embodiments, the metal layer may have a thickness of about 0.01 µm to about 3 µm, about 0.1 µm to about 3 µm, about 0.1 µm to about 2 µm, or about 0.1 µm to about 1 µm. With the metal layer having a thickness within the above ranges, the electrode assembly may provide stability while maintaining conductivity. For example, in one or more embodiments, the metal chip may have a thickness of about 2 µm to about 10 µm, about 2 µm to about 7 µm, or about 4 µm to about 6 µm. With the metal chip having a thickness within the above ranges, the metal layer and the lead-tab may be more easily connected. Because the cathode current collector 11 has the above structure, the weight of the cathode may be reduced, and as a result, energy density of the cathode and the lithium battery may improve.

### Cathode Layer: First Inactive Members

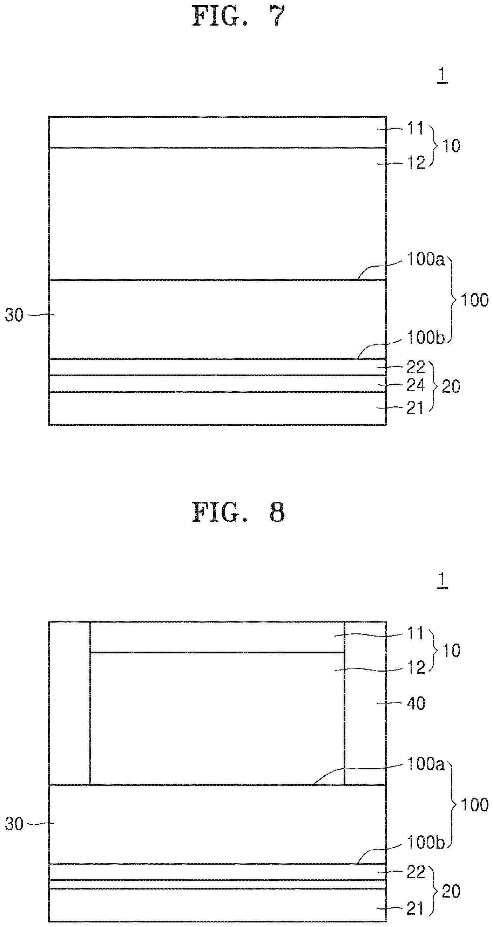

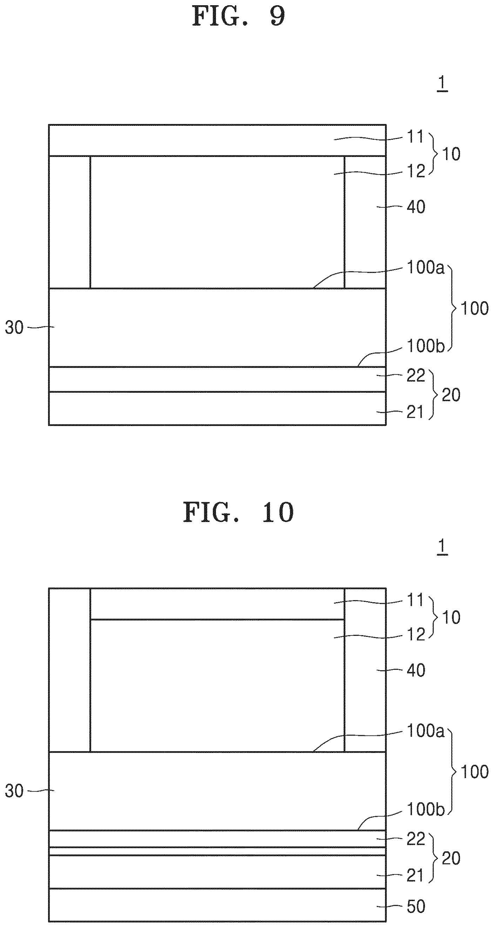

Referring to FIG. 8 and FIG. 9, in one or more embodiments, a cathode 10 may include a cathode current collector 11 and a cathode active material layer 12 on one surface of the cathode current collector 11. On one side surface of the cathode 10 (e.g., cathode layer 10), a first inactive member 40 may be disposed. Referring to FIG. 8, the first inactive member 40 may be disposed on one side surface of each of the cathode current collector 11 and the cathode active material layer 12. Referring to FIG. 9, the first inactive member 40 may be disposed on one side surface of the cathode active material layer 12 and disposed between a solid electrolyte layer 30 and the cathode current collector 11 opposing (facing) the solid electrolyte layer 30. The first inactive member 40 may not be disposed on side surface of the cathode current collector 11.

Because including the first inactive member 40 prevents the solid electrolyte layer 30 from cracking when manufacturing and/or during charging and discharging the solid secondary battery 1, the cycling performance of the solid secondary battery 1 may improve. In the solid secondary battery 1 that does not include the first inactive member 40, during manufacturing and/or charging and discharging of the solid secondary battery 1, a non-substantially uniform pressure may be applied to the solid electrolyte layer 30 that is in contact with the cathode 10, causing cracks in the solid electrolyte layer 30 and giving rise to growth of lithium metal, and thus, the likelihood of a short circuit occurring may increase.

In the solid secondary battery 1, in some embodiments, a thickness of the first inactive member 40 may be greater than a thickness of the cathode active material layer 12, or equal to the thickness of the cathode active material layer 12. In some embodiments, in the solid secondary battery 1, the thickness of the first inactive member 40 may be substantially the same as a thickness of the cathode 10. Because the thickness of the first inactive member 40 is equal to the thickness of the cathode 10, a substantially uniform pressure is applied between the cathode 10 and the solid electrolyte layer 30, and as the cathode 10 and the solid electrolyte layer 30 are sufficiently flush against each other, interfacial resistance between the cathode 10 and the solid electrolyte layer 30 may decrease. Further, as the solid electrolyte layer 30 is sufficiently sintered during the press manufacturing process of the solid secondary battery 1, the solid electrolyte layer 30 and the solid secondary battery 1 including the same may have decreased internal resistance.

In one or more embodiments, the first inactive member 40 may be in contact with the solid electrolyte layer 30 while around (e.g., surrounding) a side surface of the cathode 10. As the first inactive member 40 is in contact with the solid electrolyte layer 30 while around (e.g., surrounding) a side surface of the cathode 10, in the solid electrolyte layer 30 that is not in contact with the cathode layer 10, cracking of the solid electrolyte layer 30 caused by a pressure difference during the press process may be effectively prevented or reduced. The first inactive member 40, while around (e.g., surrounding) a side surface of the cathode 10, may be separated from the anode 20, for example, from a first anode active material layer 22. The first inactive member 40 may be in contact with the solid electrolyte layer 30 while around (e.g., surrounding) a side surface of the cathode 10, and may be apart from the anode 20. The likelihood of a short circuit occurring due to the cathode 10 and the first anode active material layer 22 coming into physical contact with each other, and/or the likelihood of a short circuit occurring due to overcharging of lithium, etc. may then be reduced. For example, because the first inactive member 40 is disposed on one side surface of the cathode active material layer 12 and also on one side surface of the cathode current collector 11 at the same time, the likelihood of a short circuit occurring due to the cathode current collector 11 and the anode 20 coming into contact with each other may be effectively inhibited.

Referring to FIG. 8 and FIG. 9, in some embodiments, the first inactive member 40 may extend from one side surface of the cathode 10 to an end portion of the solid electrolyte layer 30. With the first inactive member 40 extending to the end portion of the solid electrolyte layer 30, formation of cracks at the end portion of the solid electrolyte layer 30 may be inhibited. The end portion of the solid electrolyte layer 30 may be an outermost portion that is in contact with a side surface of the solid electrolyte layer 30. The first inactive member 40 may extend up to an outermost portion that is in contact with the side surface of the solid electrolyte layer 30. In some embodiments, the first inactive member 40 may be apart from the anode 20, for example, from the first anode active material layer 22. The first inactive member 40 may extend to the end portion of the solid electrolyte layer 30, but may not come in contact with the anode 20. For example, the first inactive member 40 may fill a space that extends from one side surface of the cathode 10 to the end portion of the solid electrolyte layer 30.

Referring to FIG. 8 and FIG. 9, in one or more embodiments, a width of the first inactive member 40 extending from one side surface of the cathode 10 to an end portion of the solid electrolyte layer 30 may be, for example, about 1 % to about 30 %, about 1 % to about 25 %, about 1 % to about 20 %, about 1 % to about 20 %, about 1 % to about 15 %, about 1 % to about 10 %, or about 1 % to about 5 %, with respect to a width between one side surface of the cathode 10 and the other side surface opposing (facing) the one side surface. If (e.g., when) the width of the first inactive member 40 is excessively large, then the energy density (e.g., energy per volume) of the solid secondary battery 1 may decrease. If (e.g., when) the width of the first inactive member 40 is too small, then the effect of placing the first inactive member 40 may be negligible.

In one or more embodiments, a surface area of the cathode 10 may be smaller than a surface area of the solid electrolyte layer 30, that is in contact with the cathode 10. The first inactive member 40 may compensate for a difference in the surface area between the cathode 10 and the solid electrolyte layer 30 by around (e.g., surrounding) the side surface of the cathode 10. Because the surface area of the first inactive member 40 compensates for the difference between the surface area of the cathode 10 and the surface area of the solid electrolyte layer 30, cracking of the solid electrolyte layer 30 caused by a pressure difference during a pressing process may be effectively suppressed or reduced. For example, the sum of the surface area of the cathode 10 and the surface area of the first inactive member 40 may be substantially equal to the surface area of the solid electrolyte layer 30.

For example, in one or more embodiments, the surface area of the cathode 10 may be less than 100 %, less than 99 %, less than 98 %, less than 97 %, less than 96 %, or less than 95 %, with respect to the surface area of the solid electrolyte layer 30. For example, in some embodiments, the surface area of the cathode 10 may be about 50 % to less than 100 %, about 50 % to about 99 %, about 55 % to about 98 %, about 60 % to about 97 %, about 70 % to about 96 %, about 80 % to about 95 %, or about 85 % to about 95 %, with respect to the surface area of the solid electrolyte layer 30.

If (e.g., when) the surface area of the cathode 10 is equal to or larger than the surface area of the solid electrolyte layer 30, then the likelihood of a short circuit occurring due to a physical contact between the anode 10 and the first anode active material layer 22, and/or the likelihood of a short circuit occurring due to overcharging of lithium, etc. increases. For example, in some embodiments, the surface area of the cathode 10 may be equal to the surface area of the cathode active material layer 12. For example, in some embodiments, the surface area of the cathode 10 may be equal to the surface area of the cathode current collector 11.

In one or more embodiments, the surface area of the first inactive member 40 may be 50 % or less, 40 % or less, 30 % or less, 20 % or less, or 10 % or less, with respect to the surface area of the cathode 10. For example, in some embodiments, the surface area of the first inactive member 40 may be about 1 % to about 50 %, about 5 % to about 40 %, about 5 % to about 30 %, about 5 % to about 20 %, or about 5 % to about 15 %, with respect to the surface area of the cathode 10.

In one or more embodiments, a surface area S1 of the cathode 10 may be smaller than a surface area S4 of the anode current collector 21. For example, in some embodiments, the surface area S1 of the cathode 10 may be less than 100 %, less than 99 %, less than 98 %, less than 97 %, less than 96 %, or less than 95 %, with respect to the surface area S4 of the anode current collector 21. For example, in some embodiments, the surface area S1 of the cathode 10 may be less than 50 % to 100 %, about 50 % to about 99 %, about 55 % to about 98 %, about 60 % to about 97 %, about 70 % to about 96 %, about 80 % to about 95 %, or about 85 % to about 95 %, with respect to the surface area S4 of the anode current collector 21. For example, in some embodiments, the surface area S4 of the anode current collector 21 may be equal to the surface area of the anode 20. For example, in some embodiments, the surface area S4 of the anode current collector 21 may be equal to the surface area of the first anode active material layer 22.

As utilized herein, "identical," "equal," and/or "same" area, length, width, thickness, and/or shape or form, unless otherwise indicated that the area, length, width, thickness, and/or shape or form are deliberately varied to differ from each other, may include "substantially identical," "substantially equal," and "substantially the same" area, length, width, thickness, and/or shape or form. For example, the "identical," "equal," and/or "same" area, length, width, thickness, and/or shape or form may include instances where an unintended difference in the area, length, width, thickness, and/or shape or form is within a range of less than 3 %, less than 2 %, less than 1 %, less than 0.5 %, or less than 0.1 %.

In one or more embodiments, a thickness of the first inactive member 40 may be more than a thickness of the first anode active material layer 22. For example, in some embodiments, the thickness of the first anode active material layer 22 may be 50 % or less, 40 % or less, 30 % or less, 20 % or less, or 10 % or less with respect to the thickness of the first inactive member 40. For example, in some embodiments, the thickness of the first anode active material layer 22 may be about 1 % to about 50 %, about 1 % to about 40 %, about 1 % to about 30 %, about 1 % to about 20 %, or about 1 % to about 10 % with respect to the thickness of the first inactive member 40.

In one or more embodiments, the first inactive member 40 may be a gasket. Utilizing a gasket as the first inactive member 40 may effectively suppress or reduce crack formation in the solid electrolyte layer 30 due to a pressure difference during a press process.

In some embodiments, the first inactive member 40 may have a monolayer structure. In some embodiments, the first inactive member 40 may have a multilayer structure. In the first inactive member 40 having a multilayer structure, each layer may have a different composition. The first inactive member 40 having a multilayer structure may have, for example, a two-layer structure, a three-layer structure, a four-layer structure, or a five-layer structure. In some embodiments, the first inactive member 40 having a multilayer structure may include, for example, one or more adhesive layers and one or more support layers. For example, the adhesive layers may effectively prevent or reduce separation between the cathode 10 and the solid electrolyte layer 30 due to volume changes of the cathode 10 that occur during charging and discharging of the cathode 10 and may improve a film strength of the first inactive member 40 by providing adhesion between the support layer and other layers. The support layers may provide support to the first inactive member 40, prevent or reduce non-uniformity of the pressure exerted on the solid electrolyte layer 30 during a press process or charge/discharge processes, and inhibit shape deformation of the solid secondary battery 1 being manufactured.

In one or more embodiments, the first inactive member 40 may have, for example, a flame-retardant inactive member. Flame retardancy provided by the flame-retardant inactive member may reduce the risk of thermal runaway and/or explosion of the solid secondary battery 1. Consequently, the safety of the solid secondary battery 1 may further improve. As the flame-retardant inactive member absorbs residual moisture inside the solid secondary battery 1, degradation of the solid secondary battery 1 may be prevented or reduced, thereby improving the lifespan characteristics of the solid secondary battery 1.

The flame-retardant inactive member may include, for example, a matrix and a filler. For example, the matrix may include a substrate and a reinforcing material. For example, the matrix may include a fibrous substrate and a fibrous reinforcing material. Because the matrix includes the substrate, the matrix may have elasticity. The matrix may be placed at one or more suitable locations and effectively accommodate volume changes during charging and discharging of the solid secondary battery 1. The substrate included in the matrix may include, for example, a first fibrous material. As the substrate includes the first fibrous material, volume changes of the cathode 10 during charging and discharging of the solid secondary battery 1 may be effectively accommodated, and deformation of the first inactive member 40 caused by volume changes of the cathode 10 may be effectively suppressed or reduced. For example, in one or more embodiments, the first fibrous material may be a material having an aspect ratio of 5 or more, 20 or more, or 50 or more. For example, in some embodiments, the first fibrous material may be a material having an aspect ratio of about 5 to about 1,000, about 20 to about 1,000, or about 50 to about 1,000. For example, the first fibrous material may be an insulating material. Because the first fibrous material is an insulating material, a short circuit that may occur between the cathode 10 and the anode 20 due to lithium dendrites and/or the like during charging and discharging of the solid secondary battery 1 may be effectively prevented or reduced. Non-limiting examples of the first fibrous material may include at least one selected from among pulp fibers, insulating polymer fibers, and ionically conductive polymer fibers. As the matrix includes the reinforcing material, strength of the matrix may improve. The matrix may serve to prevent or reduce the solid secondary battery 1 from undergoing an excessive volume change during charging and discharging, and protect the solid secondary battery 1 from deformation. In some embodiments, the reinforcing material included in the matrix may include, for example, a second fibrous material. As the reinforcing material includes the second fibrous material, a more substantially uniform increase of the strength of the matrix may be achieved. For example, the second fibrous material may be a material having an aspect ratio of 3 or more, 5 or more, or 10 or more. For example, in some embodiments, the first fibrous material may be a material having an aspect ratio of about 3 to about 100, about 5 to about 100, or about 10 to about 100. For example, the second fibrous material may be a flame-retardant material. Because the second fibrous material is a flame-retardant material, a fire caused by thermal runaway during charging and discharging of the solid secondary battery 1 or by an external impact may be effectively suppressed or reduced. For example, in one or more embodiments, the second fibrous material may be glass fibers, metal oxide fibers, ceramic fibers, and/or the like.

In one or more embodiments, the flame-retardant inactive member may include a filler in addition to the matrix. The filler may be disposed inside the matrix, may be disposed on a surface of the matrix, or may be disposed both (e.g., simultaneously) inside the matrix and on a surface of the matrix. Examples of the filler may include an inorganic material. In some embodiments, the filler included in the flame-retardant inactive member may be for example, a moisture getter. For example, the filler may remove residual moisture from the solid secondary battery 1 by adsorbing moisture at a temperature of less than 100 °C, thereby preventing or reducing degradation of the solid secondary battery 1. Further, if (e.g., when) the temperature of the solid secondary battery 1 increases to 150 °C or higher due to thermal runaway caused by an external impact, or during charging and discharging of the solid secondary battery 1, then the filler may release the adsorbed moisture to effectively prevent or reduce the solid secondary battery 1 from catching fire. For example, in some embodiments, the filer may be a flame retardant. For example, the filler may be a metal hydroxide having hygroscopicity. The metal hydroxide included in the filler may be, for example, Mg(OH)₂, Fe(OH)₃, Sb(OH)₃, Sn(OH)₄, Ti(OH)₃, Zr(OH)₄, Al(OH)₃, or any combination thereof. An amount of the filler included in the flame-retardant inactive member may be, for example, about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight, with respect to 100 parts by weight of the flame-retardant inactive member.

In one or more embodiments, the flame-retardant inactive member may include a binder, for example. The binder may include, for example, a curable polymer or a non-curable polymer. The curable polymer may be a polymer that is cured by heat and/or pressure. For example, the curable polymer may be solid at room temperature. In some embodiments, the flame-retardant inactive member may include, for example, a thermal-press curable film and/or a cured product thereof. The thermal-press curable film may be TSA-66 by Toray, for example.

In addition, to the substrate, the reinforcing material, the filler, and the binder described above, the flame-retardant inactive member may further include other materials. For example, in one or more embodiments, the flame-retardant inactive member may further include at least one selected from among a paper, an insulating polymer, an ionically-conductive polymer, an insulating inorganic material, an oxide-based solid electrolyte, and a sulfide-based solid electrolyte. The insulating polymer may be an olefin-based polymer such as polypropylene (PP), polyethylene (PE), and/or the like.

The substrate or the reinforcing material included in the flame-retardant inactive member may have a density of, for example, about 10% to about 300%, about 10% to about 150%, about 10% to about 140%, about 10% to about 130%, or about 10% to about 120%, relative to a density of a cathode active material included in the cathode active material layer 12.

The first inactive member 40 may be a member free of any material with electrochemical activity, i.e., electrode active material. The electrode active material may be a material that absorbs/desorbs lithium. The first inactive member 40 may be a member consisting of a material available in the art that is not an electrode active material.

### Anode Layer

### Anode Layer: Anode Active Material

Referring to FIGs. 1A-1C, 2A-2C, 3A-3C, 4A-4C, and 5 to 11, an anode layer 20 may include a first anode active material layer 22. The first anode active material layer 22 may include, for example, an anode active material and a binder.

The anode active material included in the first anode active material layer 22 may be, for example, an anode material capable of forming an alloy or a compound with lithium.

In one or more embodiments, the anode active material included in the first anode active material layer 22 may have, for example, a particulate form (e.g., in a form of particles). The anode active material having a particulate form (e.g., in a form of particles) may have an average particle diameter of, for example, 4 µm or less, 3 µm or less, 2 µm or less, 1 µm or less, 500 nm or less, 300 nm or less, or 100 nm or less. For example, in some embodiments, the anode active material having a particulate form (e.g., in a form of particles) may have an average particle diameter of about 10 nm to about 4 µm, about 10 nm to about 3 µm, about 10 nm to about 2 µm, about 10 nm to about 1 µm, about 10 nm to about 500 nm, about 10 nm to about 300 nm, or about 10 nm to about 100 nm. The anode active material having an average particle diameter within the above ranges may facilitate reversible absorption and/or desorption of lithium during charging and discharging. The average particle diameter of the anode active material may be, for example, a median particle diameter (D50) as measured by a laser-type or kind particle size distribution analyzer.

The anode active material included in the first anode active material layer 22 may include, for example, at least one selected from among a carbonaceous anode active material and a metal or metalloid anode active material.

In one or more embodiments, the carbonaceous anode active material may include, for example, an amorphous carbon, a crystalline carbon, a porous carbon, or any combination thereof.

In some embodiments, the carbonaceous anode active material may be, for example, an amorphous carbon. Examples of the amorphous carbon may include carbon black (CB), acetylene black (AB), furnace black (FB), Ketjen black (KB), graphene, and/or the like; however, the carbonaceous anode active material is not necessarily limited to the aforementioned examples and may be any material categorized as amorphous carbon in the art. The amorphous carbon is carbon with no crystalline structure or an extremely low degree of crystallinity and as such, may be distinguished from crystalline carbon or graphitic carbon.

In some embodiments, the carbonaceous anode active material may be porous carbon, for example. For example, pores included in the porous carbon may have a pore volume of about 0.1 cc/g to about 10.0 cc/g, about 0.5 cc/g to about 5 cc/g, or about 0.1 cc/g to about 1 cc/g. For example, pores included in the porous carbon may have an average pore diameter of about 1 nm to about 50 nm, about 1 nm to about 30 nm, or about 1 nm to about 10 nm. A Brunauer-Emmett-Teller (BET) specific surface of the porous carbon may be, for example, about 100 m²/g to about 3,000 m²/g.

The metal or metalloid anode active material may include at least one selected from among gold (Au), platinum (Pt), palladium (Pd), silicon (Si), silver (Ag), aluminum (Al), bismuth (Bi), tin (Sn), and zinc (Zn), but is not necessarily limited to the aforementioned materials. The metal or metalloid anode active material may be any metal anode active material or metalloid anode active material available in the art that may form an alloy or a compound with lithium. For example, nickel (Ni) does not form an alloy with lithium and is therefore not regarded as a metal anode active material.

Among the above anode active materials, the first anode active material layer 22 may include a single anode active material, or may include a mixture of multiple different types (kinds) of anode active materials. For example, in some embodiments, the first anode active material layer 22 may include an amorphous carbon alone or may include one or more selected from among gold (Au), platinum (Pt), palladium (Pd), silicon (Si), silver (Ag), aluminum (Al), bismuth (Bi), tin (Sn), and zinc (Zn). In some embodiments, the first anode active material layer 22 may include a mixture of amorphous carbon with at least one selected from among gold (Au), platinum (Pt), palladium (Pd), silicon (Si), silver (Ag), aluminum (Al), bismuth (Bi), tin (Sn), and zinc (Zn). A mixing ratio of the amorphous carbon to the metal(s) described herein, such as gold (Au), in such a mixture may be about 99:1 to about 1:99, about 10:1 to about 1:2, about 5:1 to about 1:1, or about 4:1 to about 2:1 in weight ratio, but without being necessarily limited thereto, may be selected according to required characteristics of the solid secondary battery 1. As the anode active material has the above compositions, cycling performance of the solid secondary battery 1 may further improve.

In one or more embodiments, the anode active material included in the first anode active material layer 22 may include, for example, a mixture of first particles including (e.g., consisting of) (e.g., of) amorphous carbon, and second particles including (e.g., consisting of) (e.g., of) a metal or metalloid. Non-limiting examples of the metal or metalloid may include gold (Au), platinum (Pt), palladium (Pd), silicon (Si), silver (Ag), aluminum (Al), bismuth (Bi), tin (Sn), zinc (Zn), and/or the like. In some embodiments, the metalloid may be a semiconductor. An amount of the second particles may be about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt%, with respect to the total weight of the mixture. Because the amount of the second particles is within the above ranges, a cycling performance of the solid secondary battery 1 may further improve.

In some embodiments, the first anode active material layer 22 may include a composite anode active material. For example, the composite anode active material may include a carbonaceous support and a metal-based anode active material supported on the carbonaceous support. With the composite anode active material having the above structure, an uneven distribution of the metal-based anode active material within the first anode active material layer may be prevented or reduced, giving rise to a substantially uniform distribution. As a result, the cycling performance of the solid secondary battery 1 including the first anode active material layer 22 may further improve.

Non-limiting examples of the metal-based anode active material supported on a carbonaceous support may include a metal, a metal oxide, a metal-metal oxide composite, or any combination thereof. The metal may include, for example, gold (Au), platinum (Pt), palladium (Pd), silicon (Si), silver (Ag), aluminum (Al), bismuth (Bi), tin (Sn), tellurium (Te), zinc (Zn), and/or the like. Non-limiting examples of the metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, zinc (Zn) oxide, and/or the like. For example, the metal oxide may include AuₓO_{y} (0<x≤2, 0<y≤3), PtₓO_{y} (0<x≤1, 0<y≤2), PdₓO_{y} (0<x≤1, 0<y≤1), SiₓO_{y} (0<x≤1, 0<y≤2), AgₓO_{y} (0<x≤2, 0<y≤1), AlₓO_{y} (0<x≤2, 0<y≤3), BiₓO_{y} (0<x≤2, 0<y≤3), SnₓO_{y} (0<x≤1, 0<y≤2), TeₓO_{y} (0<x≤1, 0<y≤3), ZnₓO_{y} (0<x≤1, 0<y≤1), or any combination thereof. Non-limiting examples of the metal-metal oxide composite may include a composite of Au and AuₓO_{y} (0<x≤2, 0<y≤3), a composite of Pt and PtₓO_{y} (0<x≤1, 0<y≤2), a composite of Pd and PdₓO_{y} (0<x≤1, 0<y≤1), a composite of Si and SiₓO_{y} (0<x≤1, 0<y≤2), a composite of Ag and AgₓO_{y} (0<x≤2, 0<y≤1), a composite of Al and AlₓO_{y} (0<x≤2, 0<y≤3), a composite of Bi and BiₓO_{y} (0<x≤2, 0<y≤3), a composite of Sn and SnₓO_{y} (0<x≤1, 0<y≤2), a composite of Te and TeₓO_{y} (0<x≤1, 0<y≤3), a composite of Zn and ZnₓO_{y} (0<x≤1, 0<y≤1), or any combination thereof.

In one or more embodiments, the carbonaceous support may be, for example, an amorphous carbon. Non-limiting examples of the amorphous carbon may include carbon black (CB), acetylene black (AB), furnace black (FB), Ketjen black (KB), graphene, activated carbon, carbon nanofibers (CNFs), carbon nanotubes (CNTs), and/or the like. However, the amorphous carbon is not necessarily limited to the aforementioned examples but may be any material classified as amorphous carbon in the art. The amorphous carbon is carbon with no crystalline structure or an extremely low degree of crystallinity and as such, may be distinguished from crystalline carbon or graphitic carbon. The carbonaceous material may be, for example, a carbonaceous anode active material.

The composite anode active material may have, for example, a particulate form (e.g., in a form of particles). The particle diameter of the composite anode active material having a particulate form (e.g., in a form of particles) may be, for example, from about 10 nm to about 4 µm, about 10 nm to about 1 µm, about 10 nm to about 500 nm, about 10 nm to about 200 nm, or about 10 nm to about 100 nm. If (e.g., when) the composite anode active material has a particle diameter within the above ranges, then reversible absorption and/or desorption of lithium during charging and discharging may be further facilitated. The metal-based anode active material supported on the support may have, for example, a particulate form (e.g., in a form of particles). For example, the metal-based anode active material may have a particle diameter of about 1 nm to about 200 nm, about 1 nm to about 150 nm, about 5 nm to about 100 nm, or about 10 nm to about 50 nm. For example, the carbonaceous support may have a particulate form (e.g., in a form of particles). For example, the carbonaceous support may have a particle diameter of about 10 nm to about 2 µm, about 10 nm to about 1 µm, about 10 nm to about 500 nm, about 10 nm to about 200 nm, or about 10 nm to about 100 nm. With the carbonaceous support having a particle diameter in the above ranges, a more substantially uniform distribution within the first anode active material layer may be achieved. For example, in some embodiments, the carbonaceous support may be nanoparticles having a particle diameter of 500 nm or less. The particle diameter of the composite anode active material, the particle diameter of the metal-based anode active material, and the particle diameter of the carbonaceous support may each be, for example, an average particle diameter. The average particle diameter may be, for example, a median particle diameter (D50) as measured by a laser-type or kind particle size distribution analyzer. In some embodiments, the average particle diameter may be automatically determined utilizing a software, or manually determined utilizing a manual computation, from an electron microscope image.

### Anode Layer: Binder

The binder included in the first anode active material layer 22 may be, for example, styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like. However, the binder is not necessarily limited to the aforementioned examples and may be any material available as a binder in the art. The binder may include (e.g., consist of) a single type or kind of binder, or multiple binders of different types (kinds).

As the first anode active material layer 22 may include a binder, the first anode active material layer 22 may be stabilized on an anode current collector 21. Further, crack formation in the first anode active material layer 22 may be suppressed or reduced, despite volume changes and/or displacement of the first anode active material layer 22 during charging and discharging processes. For example, if (e.g., when) the first anode active material layer 22 does not contain any binder, then the first anode active material layer 22 may be easily delaminated from the anode current collector 21. At an area where the anode current collector 21 is exposed as a result of delamination of the first anode active material layer 22 from the anode current collector 21, the anode current collector 21 may come in contact with the solid electrolyte layer 30, thus increasing the likelihood of a short circuit. For example, in one or more embodiments, the first anode active material layer 22 may be prepared by applying and drying a slurry having dispersed therein materials forming the first anode active material layer 22 on the anode current collector 21. By including a binder in the first anode active material layer 22, stable dispersion of the anode active materials within the slurry may be achieved. For example, if (e.g., when) applying the slurry onto the anode current collector 21 by a screen-printing method, then it may be possible to prevent or reduce the screen from clogging (for example, clogging by agglomerates of the anode active material).

### Anode Layer: Other Additives

In one or more embodiments, the first anode active material layer 22 may further include other additives utilized in a solid secondary battery, such as a filler, a coating agent, a dispersing agent, an ionically conductive aid, and/or the like.

### Anode Layer: Solid Electrolyte

In one or more embodiments, the first anode active material layer 22 may further include a solid electrolyte. The solid electrolyte may be, for example, a material selected from among solid electrolytes included in the solid electrolyte layer 30. The solid electrolyte included in the first anode active material layer 22 may act as a reaction point where formation of lithium metal starts, may act as a space where the formed lithium metal is stored, or may act as a route for transferring lithium ions in the first anode active material layer 22. In some embodiments, the solid electrolyte may not be provided.

For example, in the first anode active material layer 22, a concentration of the solid electrolyte may be high in a region adjacent to the solid electrolyte layer 30 and low in a region adjacent to the anode current collector 21. For example, in some embodiments, the solid electrolyte in the first anode active material layer 22 may have a concentration gradient in which the concentration gradually decreases from a region adjacent to the solid electrolyte layer 30 to a region adjacent to the anode current collector 21.

### Anode Layer: First Anode Active Material Layer

In one or more embodiments, an initial charge capacity of the first anode active material layer may be 50 % or less, 40 % or less, 30 % or less, 20 % or less, or 10 % or less, with respect to an initial charge capacity of the cathode active material layer.

A ratio B/A of the initial charge capacity B of the first anode active material layer 22 to the initial charge capacity A of the cathode active material layer may be about 0.005 to about 0.45. The initial charge capacity of the cathode active material layer 12 may be determined at a maximum charging voltage vs. Li/Li⁺ charged from a first open circuit voltage. The initial charge capacity of the first anode active material layer 22 may be determined at 0.01 V vs. Li/Li⁺ charged from a second open circuit voltage. The maximum charging voltage may be determined by the type or kind of the cathode active material. The maximum charging voltage may be, for example, 1.5 V, 2.0 V, 2.5 V, 3.0 V, 3.5 V, 4.0 V, 4.2 V, or 4.3 V. For example, in some embodiments, the maximum charging voltage of Li₂S or a Li₂S composite may be 2.5 V vs. Li/Li⁺. For example, in some embodiments, the maximum charging voltage of Li₂S or a Li₂S composite may be 3.0 V vs. Li/Li⁺. In one or more embodiments, the ratio B/A of the initial charge capacity B of the first anode active material layer 22 to the initial charge capacity A of the cathode active material layer may be, for example, about 0.01 to about 0.3, about 0.01 to about 0.2, or about 0.05 to about 0.1. The initial charge capacity (mAh) of the cathode active material layer 12 may be obtained by multiplying the charge specific capacity (mAh/g) of the cathode active material layer 12 by the mass (g) of a cathode active material in the cathode active material layer 12. If (e.g., when) multiple types (kinds) of cathode active materials are utilized, then the product of charge specific density × mass may be calculated for each cathode active material, and the sum of these products may be defined as the initial charge capacity of the cathode active material layer 12. The initial charge capacity of the first anode active material layer 22 may also be calculated in substantially the same manner. The initial charge capacity of the first anode active material layer 22 may be obtained by multiplying the charge specific density (mAh/g) of an anode active material by the mass of the anode active material in the first anode active material layer 22. If (e.g., when) multiple types (kinds) of anode active materials are utilized, then the product of charge specific density × mass may be calculated for each anode active material, and the sum of these products may be defined as the initial charge capacity of the first anode active material layer 22. The charge specific density of each of the cathode active material and the anode active material may be measured utilizing a solid half-cell utilizing lithium metal as a counter electrode. The initial charge capacity of each of the cathode active material layer 12 and the first anode active material layer 22 may be directly measured by utilizing a solid half-cell at a constant current density, for example, 0.1 mA/cm². For the cathode, this measurement may be made for an operating voltage from a 1^{st} open circuit voltage (OCV) to a maximum charge voltage, for example, 3.0 V (vs. Li/Li⁺). For the anode, this measurement may be made for an operating voltage from a second OCV to 0.01 V with respect to the anode, for example, lithium metal. For example, the solid half-cell having the cathode active material layer may be charged with a constant current of 0.1 mA/cm² to 3.0 V from the 1^{st} OCV, and the solid half-cell having the first anode active material layer may be discharged with a constant current of 0.1 mA/cm² to 0.01 V from the second OCV. For example, in some embodiments, the current density during the constant current charging may be 0.2 mA/cm² or 0.5 mA/cm². The solid half-cell having the cathode active material layer may be charged, for example, to 2.5 V, 2.0 V, 3.5 V, or 4.0 V from the first OCV. The maximum charge voltage of the cathode active material layer may be determined according to the maximum voltage of a cell that satisfies the safety conditions described in JISC8712:2015 by Japanese Standards Association.

If (e.g., when) the initial charge capacity of the first anode active material layer 22 is excessively small, then the thickness of the first anode active material layer 22 becomes extremely small, and as a result, lithium dendrites formed between the first anode active material layer 22 and the anode current collector 21 during repeated charging/discharging processes may cause the first anode active material layer 22 to collapse, making it difficult to improve the cycling performance of the solid secondary battery 1. If (e.g., when) the charge capacity of the first anode active material layer 22 is excessively large, then the energy density of the solid secondary battery 1 may decrease, and the internal resistance of the solid secondary battery 1 by the first anode active material layer 22 may increase, thus making it difficult to achieve improved cycling performance of the solid secondary battery 1.

For example, in one or more embodiments, the first anode active material layer 22 may have a thickness of 50 % or less, 40 % or less, 30 % or less, 20 % or less, 10 % or less, or 5 % or less, with respect to a thickness of the cathode active material layer 12. For example, in some embodiments, the first anode active material layer 22 may have a thickness of about 1 % to about 50 %, about 1 % to about 40 %, about 1 % to about 30 %, about 1 % to about 20 %, about 1 % to about 10 %, or about 1 % to about 5 %, with respect to the thickness of the cathode active material layer 12. For example, in one or more embodiments, the first anode active material layer 22 may have a thickness of about 1 µm to about 20 µm, about 2 µm to about 15 µm, or about 3 µm to about 10 µm. If (e.g., when) the first anode active material layer 22 is excessively thin, then lithium dendrites formed between the first anode active material layer 22 and the anode current collector 21 may cause the first anode active material layer 22 to disintegrate, thus making it difficult to achieve improved cycling performance of the solid secondary battery 1. If (e.g., when) the first anode active material layer 22 excessively increases, then the energy density of the solid secondary battery 1 may decrease, and the internal resistance of the solid secondary battery 1 by the first anode active material layer 22 may increase, thus making it difficult to achieve improved cycling performance of the solid secondary battery 1. If (e.g., when) the thickness of the first anode active material layer 22 decreases, for example, then the initial charge capacity of the first anode active material layer 22 may also decrease.

### Anode Layer: Second Anode Active Material Layer

Referring to FIG. 7, in one or more embodiments, the solid secondary battery 1 may further include, for example, a second anode active material layer 24 that is disposed between the anode current collector 21 and the first anode active material layer 22 after charging. The second anode active material layer 24 may be a metal layer including lithium or a lithium alloy. The metal layer may include lithium or a lithium alloy. As such, the second anode active material layer 24, being a metal layer containing lithium, may act as a lithium reservoir, for example. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but without being limited thereto, and may be any material available as a lithium alloy in the art. The second anode active material layer 24 may include (e.g., consist of) one of such alloys, or lithium, or may include (e.g., consist of) one or more suitable types (kinds) of such alloys. In some embodiments, the second anode active material layer 24 may be, for example, a plated layer. For example, the second anode active material layer 24 may be plated between the first anode active material layer 22 and the anode current collector 21 during a charging process of the solid secondary battery 1.

The second anode active material layer 24 is not limited to any particular thickness, but may have a thickness of, for example, about 1 µm to about 500 µm, about 1 µm to about 200 µm, about 1 µm to about 150 µm, about 1 µm to about 100 µm, or about 1 µm to about 50 µm. if (e.g., when) the thickness of the second anode active material layer 24 is excessively small, then the second anode active material layer 24 may fail to sufficiently function as a lithium reservoir. If (e.g., when) the thickness of the second anode active material layer 24 is excessively large, then the mass and volume of the solid secondary battery 1 increase, and as a result, the cycling performance of the solid secondary battery 1 may be more likely to deteriorate.

In some embodiments, in the solid secondary battery 1, the second anode active material layer 24 may be disposed between the anode current collector 21 and the first anode active material layer 22 prior to assembly of the solid secondary battery 1, for example. If (e.g., when) the second anode active material layer 24 is to be positioned between the anode current collector 21 and the first anode active material layer 22 prior to assembly of the solid secondary battery 1, then the second anode active material layer 24 is a metal layer containing lithium and thus acts as a lithium reservoir. For example, in some embodiments, a lithium foil may be positioned between the anode current collector 21 and the first anode active material layer 22 prior to assembly of the solid secondary battery 1.

If (e.g., when) the second anode active material layer 24 is to be plated by charging after assembly of the solid secondary battery 1, the second anode active material layer 24 is not included at the time of assembly of the solid secondary battery 1, and therefore, the solid secondary battery 1 may have increased energy density. When charging the solid secondary battery 1, the charging may be performed exceeding the charge capacity of the first anode active material layer 22. In some embodiments, the first anode active material layer 22 may be overcharged. At the beginning of the charging, lithium may be absorbed into the first anode active material layer 22. The anode active material included in the first anode active material layer 22 may form an alloy or a compound with lithium ions moved from the cathode 10. When charged to exceed the capacity of the first anode active material layer 22, lithium may be plated, for example, on the back side of the first anode active material layer 22, e.g., between the anode current collector 21 and the first anode active material layer 22, and then a metal layer corresponding to the second anode active material layer 24 may be formed by the plated lithium. The second anode active material layer 24 may be a metal layer mainly consisting of lithium (i.e., metal lithium). This result may be attributed to the fact that the anode active material included in the first anode active material layer 22 includes a material that forms an alloy or a compound with lithium. During discharge, lithium of the first anode active material layer 22 and the second anode active material layer 24, for example, a metal layer, is ionized and migrates toward the cathode 10. Therefore, lithium may be utilized as an anode active material in the solid secondary battery 1. Because the first anode active material layer 22 is coated on the second anode active material layer 24, the first anode active material layer 22 may function as a protective layer for the second anode active material layer 24, for example, a metal layer, while inhibiting precipitation and growth of lithium dendrites. Therefore, short circuits and capacity fading in the solid secondary battery 1 may be inhibited, and consequently, the cycling performance of the solid secondary battery 1 may improve. Further, in some embodiments, if (e.g., when) the second anode active material layer 24 is to be disposed by charging after assembly of the solid secondary battery 1, the anode 20, for example, the anode current collector 21, the first anode active material layer 22, and the area therebetween, is a Li-free region free of Li, while the solid secondary battery 1 is in an initial state or a fully discharged state.

### Anode Layer: Anode Current Collector

The anode current collector 21 may be formed of a material that does not (substantially) react with lithium, for example, does not form an alloy or a compound with lithium. Examples of the material forming the anode current collector 21 may include copper (Cu), stainless steel, titanium (Ti), iron (Fe), cobalt (Co), nickel (Ni), and/or the like. However, the material forming the anode current collector 21 is not necessarily limited to the aforementioned materials but may be any material available as an electrode current collector in the art. The anode current collector 21 may be formed of one of the aforementioned metals, an alloy of two or more metals thereof, or a covering (coating) material. The anode current collector 21 may be, for example, a plate type or kind or a foil type or kind.

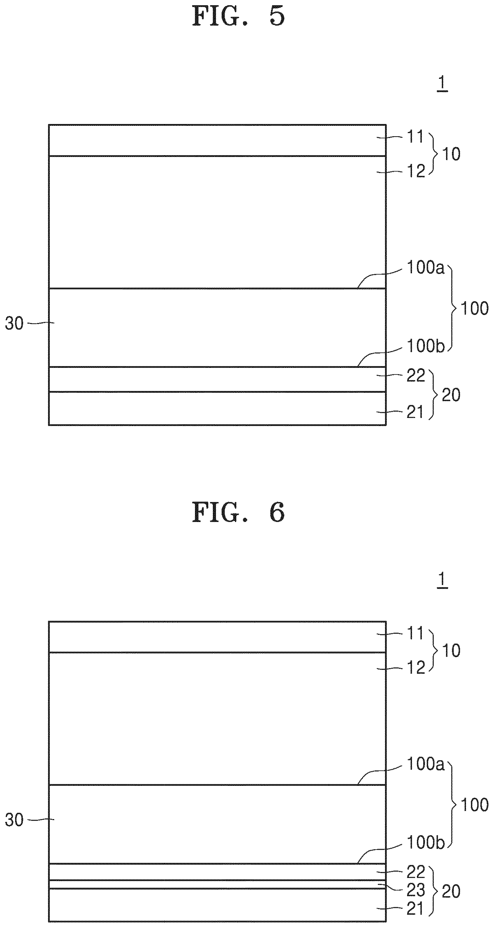

Referring to FIG. 6, in one or more embodiments, the solid secondary battery 1 may further include, on one surface (side) of the anode current collector 21, a thin film 23 containing an element capable of forming an alloy with lithium. The thin film 23 may be positioned between the anode current collector 21 and the anode active material layer 22. The thin film 23 may include, for example, an element capable of forming an alloy with lithium. Examples of the element capable of forming an alloy with lithium may include gold, silver, zinc, tin, indium, silicon, aluminum, bismuth, and/or the like, but without being limited thereto, any element available in the art that is capable of forming an alloy with lithium may be utilized. The thin film 23 may include (e.g., consist of) one of the aforementioned metals, or may include (e.g., consist of) an alloy of different types (kinds) of metals. Because the thin film 23 is disposed on the anode current collector 21, the plated form of the second anode active material layer 24 being plated between the thin film 23 and the first anode active material layer 22 may be further flattened, and the cycling performance of the solid secondary battery 1 may further improve.

A thickness of the thin film 23 may be, for example, about 1 nm to about 800 nm, about 10 nm to about 700 nm, about 50 nm to about 600 nm, or about 100 nm to about 500 nm. If (e.g., when) the thickness of the thin film 23 is less than 1 nm, then it may be difficult to achieve functions attributable to the thin film 23. If (e.g., when) the thickness of the thin film 23 is excessively large, then it may cause the thin film 23 to absorb lithium by itself, decreasing the amount of lithium precipitated at the anode. As a result, the solid battery may have decreased energy density, and the cycling performance of the solid secondary battery 1 may deteriorate. The thin film 23 may be disposed on the anode current collectors 21 by a method such as a vacuum deposition method, a sputtering method, and/or a plating method. However, without being limited to the aforementioned methods, any method available in the art that is capable of forming the thin film 23 may be utilized.

In one or more embodiments, the anode current collector 21 may include, for example, a base film, and a metal layer disposed on one side or both (e.g., simultaneously) sides of the base film. The base film may include, for example, a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or any combination thereof. The polymer may be an insulating polymer. Because the base film includes an insulating thermoplastic polymer, the base film in the event of a short circuit may get softened or liquified, thereby blocking the battery operation to inhibit a rapid increase in electric current. For example, the metal layer may include copper (Cu), stainless steel, titanium (Ti), iron (Fe), cobalt (Co), nickel (Ni), or any alloy thereof. In some embodiments, the anode current collector 21 may further include a metal chip and/or a lead-tab. For details of the base film, the metal layer, the metal chip, and the lead-tab of the anode current collector 21, refer to the cathode current collector 11 described above. With the anode current collector 21 having such a structure, the weight of the electrode may be reduced, and as a result, the energy density of the solid secondary battery may improve.

### Anode Layer: Second Inactive Member

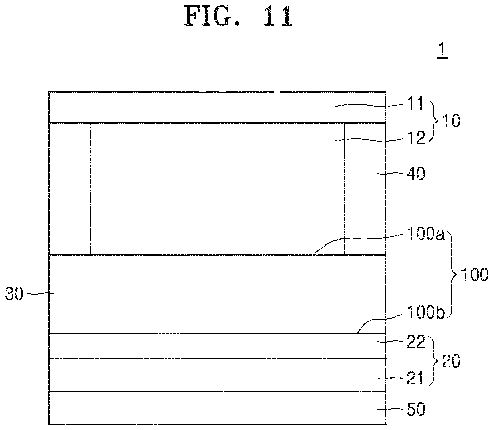

Referring to FIG. 10 and FIG. 11, in one or more embodiments, the solid secondary battery 1 may further include a second inactive member 50 disposed on the other surface of the anode current collector 21 (e.g., on the surface of the anode current collector 21 opposite the surface of the anode current collector 21 on which the anode active material layer 22 is disposed).

The second inactive member 50, due to having conductivity by further including a conductive material, may be distinguished from the first inactive member 40. The second inactive member 50 may have, for example, a conductive flame-retardant inactive member.

Non-limiting examples of the conductive material may include graphite, carbon black, acetylene black, Ketjen black, Denka black, carbon fibers, carbon nanotubes (CNTs), graphene, metal fibers, metal powder, and/or the like. The electronic conductivity at 25 °C of the second inactive member 50 may be, for example, 100 times or more, 1,000 times or more, or 10,000 times more the electronic conductivity at 25 °C of the first inactive member 40.

The second inactive member 50 may include, for example, a matrix, a filler, and a conductive material. For example, the matrix may include a substrate and a reinforcing material. In some embodiments, the second inactive member 50 may further include a filler, a binder, and/or the like. For example, an amount of the conductive material included in the second inactive member 50 may be about 1 part by weight to about 30 parts by weight, about 1 part by weight to about 20 parts by weight, about 1 part by weight to about 15 parts by weight, about 1 part by weight to about 10 parts by weight, about 5 parts by weight to about 40 parts by weight, about 5 parts by weight to about 30 parts by weight, or about 5 parts by weight to about 35 parts by weight, with respect to 100 parts by weight of the second inactive member 50.

In one or more embodiments, A Young's modulus of the second inactive member 50 may be, for example, smaller than a Young's modulus of the anode current collector 21. The Young's modulus of the second inactive member 50 may be, for example, 50 % or less, 30 % or less, 10 % or less, 5 % or less, of the Young's modulus of the anode current collector 21. In some embodiments, the Young's modulus of the second inactive member 50 may be, for example, about 0.01 % to about 50 %, about 0.1 % to about 30 %, about 0.1 % to about 10 %, about 1 % to about 5 %, with respect to the Young's modulus of the anode current collector 21. In one or more embodiments, the Young's modulus of the second inactive member 50 may be, for example, 100 MPa or less, 50 MPa or less, 30 MPa or less, 10 MPa or less, or 5 MPa or less. In some embodiments, the Young's modulus of the second inactive member 50 may be, for example, about 0.01 MPa to about 100 MPa, about 0.1 MPa to about 50 MPa, about 0.1 MPa to about 30 MPa, about 0.1 MPa to about 10 MPa, or about 1 MPa to about 5 MPa.

The second inactive member 50, due to having conductivity, may act as the anode current collector 21. In some embodiments, because the second inactive member 50 has a lower Young's modulus than that of the anode current collector 21, volume changes of the anode layer 20 may be more effectively accommodated during charging and discharging of the solid secondary battery 1. For example, as the second inactive member 50 effectively buffers an internal stress caused by a volume change of the solid secondary battery 1 during charging and discharging of the solid secondary battery 1, the cycling performance of the solid secondary battery 1 may improve.

For example, in one or more embodiments, a thickness of the second inactive member 50 may be more than the thickness of the first anode active material layer 22. With the second inactive member 50 having a larger thickness than that of the first anode active material layer 22, volume changes of the anode layer 20 during charging and discharging may be more effectively accommodated. The thickness of the first anode active material layer 22 may be 50 % or less, 40 % or less, 30 % or less, 20 % or less, or 10 % or less with respect to the thickness of the second inactive member 50. For example, in some embodiments, the thickness of the first anode active material layer 22 may be about 1 % to about 50 %, about 1 % to about 40 %, about 1 % to about 30 %, about 1 % to about 20 %, or about 1 % to about 10 % with respect to the thickness of the second inactive member 50. In some embodiments, the thickness of the second inactive member 50 may be, for example, about 1 µm to about 300 µm, about 10 µm to about 300 µm, about 50 µm to about 300 µm, or about 100 µm to about 200 µm. If (e.g., when) the thickness of the second inactive member 50 is excessively small, then it may be difficult to provide intended effects, and if (e.g., when) the thickness of the second inactive member 50 is excessively large, then the energy density of the solid secondary battery 1 may deteriorate. The shape of the second inactive member 50 is not limited and may be selected depending on the shape of the solid secondary battery 1. The second inactive member 50 may have, for example, a sheet shape, a rod shape, or a gasket shape. The second inactive member 50 may be disposed, for example, on one side or both (e.g., simultaneously) sides of one solid secondary battery 1. In one or more embodiments, the second inactive member 50 may be disposed, for example, between a plurality of solid secondary battery 1, stacked one on top of the other. In some embodiments, the second inactive member 50 may be disposed, for example, between a plurality of solid secondary battery 1 stacked one on top of the other, on an uppermost surface thereof, and/or a lowermost surface thereof.

The present disclosure will be described in greater detail through the following examples and comparative examples. However, it will be understood that the examples are provided only to illustrate the present disclosure and not to be construed as limiting the scope of the present disclosure.

### Example 1: Cathode layer/First interlayer/Sulfide solid electrolyte layer/Second interlayer/Anode layer, thermosetting polymer gel electrolyte

### Preparation of Composite Cathode Active Material

Li₂S and LiI were mixed in a weight ratio of 30:20. The resulting mixture was mechanically milled utilizing a ball mill, to produce a Li₂S-LiI composite. The milling conditions were for 10 hours at 25 °C and 600 rpm. The milling energy applied to a sample during milling was 20 G. Then, the Li₂S-LiI composite and carbon nanofibers (CNFs) were mixed in a weight ratio of 50:10. The mixture was mechanically milled utilizing a ball mill, to produce a Li₂S-LiI-CNF composite. The milling conditions were for 10 hours at 25 °C and 600 rpm. The milling energy applied to a sample during milling was 20 G. The Li₂S-LiI-CNF composite was utilized as a composite cathode active material.

### Preparation of Cathode Layer

The Li₂S-LiI-CNF composite described above was prepared as a cathode active material. As a solid electrolyte, argyrodite-type or kind Li₆PS₅Cl crystals (D50=1.0 µm, crystalline) were prepared. Polytetrafluoroethylene (PTFE) was prepared as a binder. The aforementioned materials, i.e., the composite cathode active material, the solid electrolyte, and the binder in a weight ratio of 60:40:1.2 to prepare a cathode mixture. The cathode mixture was obtained by dry mixing, utilizing a ball mill.

The cathode mixture was placed on one side of a cathode current collector made of an aluminum foil carbon-coated on the one side thereof, and was plate-pressed for 10 minutes with a pressure of 200 MPa to produce a cathode. The thickness of the cathode was about 120 µm. The thickness of the cathode active material layer was about 100 µm, and the thickness of the carbon-coated aluminum foil was about 20 µm. The surface area of the cathode active material layer was the same as that of the cathode current collector.

### Preparation of Anode Layer

As an anode current collector, a 10 µm-thick stainless steel (SUS) sheet was prepared. As anode active materials, carbon black (CB) having a primary particle diameter of about 30 nm and silver (Ag) particles having an average particle diameter of about 60 nm were prepared.

4 grams (g) of the mixed powder containing CB and Ag particles in a weight ratio of 3:1 was placed in a container, and 4 g of an N-methylpyrrolidone (NMP) solution containing 7 wt% of a polyvinylidene fluoride (PVDF) binder (#9300, KUREHA) was added thereto to prepare a mixed solution. Then, this mixed solution was stirred, while slowly adding NMP to this mixed solution, to produce a slurry. The produced slurry was coated onto the SUS sheet utilizing a bar coater, and dried in the open air at 80 °C for 10 minutes. The laminate thus obtained was vacuum-dried at 40 °C for 10 hours. The surface of a first anode active material layer of the laminate was flattened by cold roll-pressing the dried laminate at a rate of 5 m/sec with a pressure of 5 ton·f/cm². The anode layer was prepared by the process above. The thickness of the anode active material layer included in the anode layer was about 15 µm. The surface area of the first anode active material layer was the same as that of the anode current collector.

### Preparation of Solid Electrolyte Layer

In argyrodite-type or kind crystal Li₆PS₅Cl solid electrolyte (D₅₀=5.0 µm, crystalline), 1.5 parts by weight of an acryl-based binder with respect to 98.5 parts by weight of the solid electrolyte was added to prepare a mixture. The prepared mixture was stirred while adding octyl acetate thereto, to produce a slurry. The produced slurry was coated onto a 15-µm thick nonwoven fabric placed on a 75 µm-thick polyethylene terephthalate (PET) substrate by utilizing a bar coater, and dried in open air at a temperature of 80 °C for 10 minutes to obtain a laminate. The laminate thus obtained was vacuum-dried at 80 °C for 2 hours. The solid electrolyte layer was prepared by the process above.

### First Inactive Member

A slurry obtained by mixing cellulose fibers, glass fibers, aluminum hydroxide (Al(OH)₃), an acryl-based binder, and a solvent was molded in the form of a gasket, and then the solvent was removed therefrom to produce a flame-retardant inactive member as a first inactive member.

The weight ratio of pulp fibers (cellulose fibers):glass fibers: aluminum hydroxide (Al(OH)₃):acryl-based binder was 20:8:70:2. The thickness of the inactive member was 120 µm.

Before placing the produced flame-retardant inactive member on a solid electrolyte layer, the flame-retardant inactive member was thermally treated under vacuum at 80 °C for 5 hours to remove moisture, etc. from the flame-retardant inactive member.

### Thermosetting Electrolyte Composition

In a 20 L four-neck flask assembled with a stirrer, a thermometer, and a condenser, distilled water was added as a solvent, and 2-(N,N-dimethylamino)ethyl acrylate, methyl acrylate, and acrylonitrile were added in a certain molar ratio, and a small amount of potassium persulfate was added as an initiator. A reaction was allowed to occur for 18 hours while maintaining the temperature of the reaction solution stable between 65 °C and 70 °C. Then, the reaction solution was allowed to cool to room temperature, and the pH of the reaction solution was adjusted to 7 to 8 utilizing 25 % aqueous ammonia solution to produce an acryl-based polymer, poly(2-(N,N-dimethylamino)ethyl acrylate-co-methyl acrylate-co-acrylonitrile), which is a copolymer represented by Formula A. The molar ratio of 2-(N,N-dimethylamino)ethyl acrylate, methyl acrylate, and acrylonitrile was 20:15:65. The weight average molecular weight of the acryl-based binder was about 60,000 Dalton. Using gel permeation chromatography (GPC), the weight average molecular weight of the acryl-based polymer was measured as a value relative to a polystyrene standard sample.

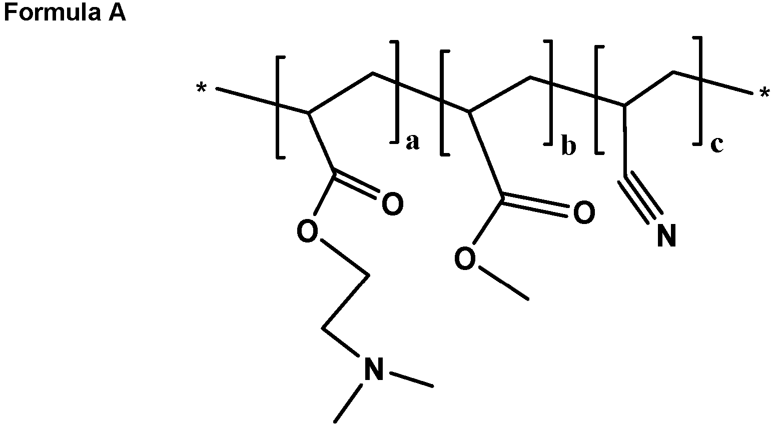

In 94 g of a non-aqueous organic solvent containing a mixture of ethylene carbonate (EC) and dimethyl carbonate (DMC) in a volume ratio of 15:85, 1.0 M LiPF₆ and 1.0 M lithium bis(trifluoromethane)sulfonimide (LiTFSI) were dissolved, and 5.0 g of an acryl-based polymer represented by Formula A was added to prepare a thermosetting electrolyte composition.

### Preparation of Solid Secondary Battery

The above-described thermosetting electrolyte composition was coated on one surface of the solid electrolyte layer and the other surface thereof, opposite (facing away from) the one surface.

As shown in FIG. 8, the solid electrolyte layer was disposed on the anode layer such that the first anode active material layer is in contact with one surface of the solid electrolyte layer, and the cathode layer was disposed on the other surface of the solid electrolyte layer. A gasket may be disposed around the cathode layer while around (e.g., surrounding) the cathode layer to thereby prepare a laminate. The thickness of the gasket was about 120 µm. The flame-retardant inactive member was utilized as the gasket. The gasket was disposed such that the gasket is in contact with a side surface of the cathode layer, and the solid electrolyte layer. The cathode layer was disposed in the center portion of the solid electrolyte layer, and the gasket was placed extending to an end portion of the solid electrolyte layer while around (e.g., surrounding) the cathode layer. The surface area of the cathode layer was about 90 % of the surface area of the solid electrolyte layer, and the gasket was disposed in the entire remaining 10 % of the surface area of the solid electrolyte layer that does not have the cathode layer disposed therein.

The laminate was plate-pressed with a pressure of 2.5 MPa at 85 °C for 1 hour, and heat-treated. by the press treatment, the solid electrolyte layer was sintered, and accordingly had improved battery performance. The thickness of the sintered solid electrolyte layer was about 45 µm. The density of the argyrodite-type or kind crystal Li₆PS₅Cl solid electrolyte included in the sintered solid electrolyte layer was 1.47 g/cc. The surface area of the solid electrolyte layer was the same as the surface area of the anode layer.

In some embodiments, because the heat treatment was carried out at the same time as the pressing treatment, the thermosetting composition was thermoset to form a polymer gel electrolyte. The first interlayer (polymer gel electrolyte layer) was disposed between the cathode layer and the solid electrolyte layer, and the second interlayer (polymer gel electrolyte layer) was disposed between the anode layer and the solid electrolyte layer. In some embodiments, as the thermosetting composition dispersed in the solid electrolyte layer interior is thermoset during the press process, the polymer gel electrolyte was disposed in the solid electrolyte layer interior as well.

The pressed laminate was placed in a pouch and vacuum-sealed. A part of the cathode current collector and the anode current collector was extended out of the sealed battery and utilized as a cathode layer terminal and an anode layer terminal, respectively.

### Example 2: Cathode layer/First interlayer/Sulfide solid electrolyte layer/Anode layer, thermosetting polymer gel electrolyte

A solid secondary battery was prepared following substantially the same process as in Example 1, except that only one surface of the solid electrolyte layer was coated with the thermosetting electrolyte composition, and the other surface of the solid electrolyte layer was not coated with the thermosetting electrolyte composition.

The first interlayer (polymer gel electrolyte layer) was disposed between the cathode layer and the solid electrolyte layer, but the second interlayer was not disposed between the anode layer and the solid electrolyte layer.

### Example 3: Cathode layer/Sulfide solid electrolyte layer/Second interlayer/Anode layer, thermosetting polymer gel electrolyte

A solid secondary battery was prepared following substantially the same process as in Example 1, except that one surface of the solid electrolyte layer was not coated with the thermosetting electrolyte composition, and only the other surface of the solid electrolyte layer was coated with the thermosetting electrolyte composition.

The first interlayer was not disposed between the cathode layer and the solid electrolyte layer, but the second interlayer (polymer gel electrolyte layer) was disposed between the anode layer and the solid electrolyte layer.

### Example 4: Cathode layer/First interlayer/Sulfide solid electrolyte layer/Second interlayer/Anode layer, high-viscosity liquid electrolyte

A solid secondary battery was prepared following substantially the same process as in Example 1, except that one surface and the other surface of the solid electrolyte layer were coated with the ionic liquid-containing liquid electrolyte, and the heat treatment process was omitted.

The liquid electrolyte including an ionic liquid was prepared as follows.

In 65 g of a non-aqueous organic solvent containing a mixture of EC and diethyl carbonate (DEC) in a volume ratio of 15:85, 1.0 M LiPF₆ and 1.0 M LiTFSI were dissolved, and then 35 g of an ionic liquid represented by Formula B was added to prepare a liquid electrolyte.

As the ionic liquid, 1-methyl-1-propylpyrrolidinium bis(trifluoromethanesulfonyl)imide represented by Formula B was utilized.

The viscosity of the ionic liquid was 22.5 cps at 25 °C and 1 atm.

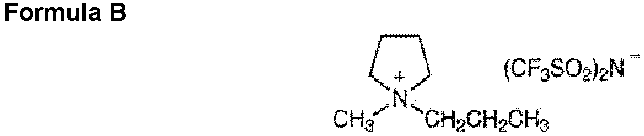

### Example 5: Cathode layer/First interlayer/Sulfide solid electrolyte layer/Anode layer, high-viscosity liquid electrolyte

A solid secondary battery was prepared following substantially the same process as in Example 4, except that only one surface of the solid electrolyte layer was coated with the ionic liquid-containing liquid electrolyte and the other surface of the solid electrolyte layer was not coated with the ionic liquid-containing liquid electrolyte.

The ionic liquid-containing liquid electrolyte layer was disposed between the cathode layer and the solid electrolyte layer, but the ionic liquid-containing liquid electrolyte layer was not disposed between the anode layer and the solid electrolyte layer.

### Example 6: Cathode layer/Sulfide solid electrolyte layer/Second interlayer/Anode layer, high-viscosity liquid electrolyte

A solid secondary battery was prepared following substantially the same process as in Example 4, except that one surface of the solid electrolyte layer was not coated with the ionic liquid-containing liquid electrolyte, and only the other surface of the solid electrolyte layer was coated with the ionic liquid-containing liquid electrolyte.

The ionic liquid-containing liquid electrolyte layer was not disposed between the cathode layer and the solid electrolyte layer, but the ionic liquid-containing liquid electrolyte layer was disposed between the anode layer and the solid electrolyte layer.

### Example 7: Cathode layer/First interlayer/Sulfide solid electrolyte layer/Second interlayer/Anode layer, set polymer gel electrolyte

A solid secondary battery was prepared following substantially the same process as in Example 1, except that one surface and the other surface of the solid electrolyte layer were coated with the thermosetting electrolyte composition and subjected to a heat treatment at 85 °C for 2 hours, thereby forming the polymer gel electrolyte thermoset on the one surface and the other surface of the solid electrolyte layer, prior to preparing the laminate.

### Example 8: Cathode layer/First interlayer/Sulfide solid electrolyte layer/Second interlayer/Anode layer, thermosetting polymer gel electrolyte, elastic sheet member

A solid secondary battery was prepared following substantially the same process as in Example 1, except that the solid secondary battery was prepared by additionally disposing, before placing the pressed laminate into the pouch, a sheet-shaped conductive flame-retardant member with the same surface area and shape as the laminate, on the outer surface of the anode current collector of the pressed laminate, followed by vacuum-sealing.

The conductive flame-retardant inactive member sheet was prepared as follows. The conductive flame-retardant inactive member sheet may act as an elastic sheet.

A slurry obtained by mixing pulp fibers (cellulose fibers), glass fibers, aluminum hydroxide (Al(OH)₃), an acryl-based binder, a conductive material (Denka black), and a solvent, was formed into a sheet, and the sheet was dried to produce a flame-retardant inactive member. The weight ratio of pulp fibers (cellulose fibers):glass fibers: aluminum hydroxide (Al(OH)₃): acryl-based binder: conductive material was 20:8:50:2:20. The thickness of the conductive flame-retardant inactive member was 120 µm. Before placing the produced conductive flame-retardant inactive member on an anode current collector, the conductive flame-retardant inactive member was thermally treated under vacuum at 80 °C for 5 hours to remove moisture, etc. from the conductive flame-retardant inactive member.

### Example 9: Cathode layer/First interlayer/Sulfide solid electrolyte layer/Second interlayer/Anode layer, thermosetting polymer gel electrolyte, Ag-loaded carbon

A solid secondary battery was prepared following substantially the same process as in Example 2, except that instead of the mixture of carbon black and silver particles, the carbon black loaded with silver particles was utilized as the anode active material.

### Preparation of carbon black loaded with silver particles

Carbon black was dispersed in 1.0 M sulfuric acid solution and stirred for 2 hours, followed by filtration and drying, to prepare acid-treated carbon black.

10 g of the acid-treated carbon black was introduced and stirred in a mixed solvent containing 1,500 g of distilled water, 1,500 g of ethanol, and 30 g of glycerol, and then 2 g of AgNO₃ was introduced therein and stirred to prepare a mixed solution. The particle diameter of the carbon black was 80 nm. By introducing a reducing agent into the mixed solution, silver ions were reduced and supported on the carbon black. The carbon black loaded with silver-containing particles was filtered, washed and dried to prepare a composite anode active material. It was confirmed by scanning electron microscopy and X-ray photoelectron spectroscopy (XPS) that a plurality of silver-containing particles were supported on carbon black particles. The silver-containing particles were silver particles, silver oxide (Ag₂O) particles, and composite particles of silver (Ag) and silver oxide (Ag₂O). The amount of silver-containing particles included in the composite anode active material was 5 wt%. The average particle diameter of the silver particles was 10 nm.

### Comparative Example 1: Cathode layer/Sulfide solid electrolyte layer/Anode layer, utilizing low-viscosity liquid electrolyte

A solid secondary battery was prepared following substantially the same process as Example 1, except that one surface and the other surface of the solid electrolyte layer were coated with a liquid electrolyte, and the heat treatment was omitted.

The liquid electrolyte was prepared as follows.

The liquid electrolyte was prepared by dissolving 1.0 M LiPF₆ in 100 g of a non-aqueous organic solvent containing a mixture of EC and DEC in a volume ratio of 30:70. The viscosity of the liquid electrolyte was less than 5 cps at 25 °C and 1 atm.

### Comparative Example 2: Cathode layer/Sulfide solid electrolyte layer/Anode layer, free of thermosetting electrolyte composition

A solid secondary battery was prepared following substantially the same process as Example 1, except that one surface and the other surface of the solid electrolyte layer were not coated with a thermosetting electrolyte composition, and the heat treatment was omitted.

### Reference Example 1: Lithium metal anode

A solid secondary battery was prepared following substantially the same process as Example 1, except that instead of the first anode active material layer including carbon black (CB) and silver (Ag) particles, a 20 µm-thick lithium metal foil was utilized as the anode active material layer.

### Reference Example 2: Free of First Inactive Member

A solid secondary battery was prepared following substantially the same process as Example 1, except that flame-retardant inactive members (e.g., gaskets) were not utilized when preparing a solid secondary battery.

### Evaluation Example 1: Evaluation of Lifespan Characteristics

The solid secondary batteries prepared in Examples 1 to 8, Reference Examples 1 and 2, and Comparative Examples 1 and 2 were each evaluated for charge-discharge characteristics by a cycling test as follows.

The cycling test was performed by placing the solid secondary battery in a constant-temperature bath at 45 °C.

In the first cycle, each battery was charged at a constant current of 0.1 C for 12.5 hours until the battery voltage reached a voltage of 2.5 V to 2.8 V. Then, the battery was discharged at a constant current of 0.1 C for 12.5 hours until the battery voltage reached 0.3 V.

The discharge capacity in the first cycle was utilized as a standard capacity.

After the first cycle, charge and discharge were performed up to 150 cycles under the same conditions as the first cycle. A part of the measurement results is shown in Table 1.

Cycle number refers to the number of cycles required for the discharge capacity to decrease down to 80 % of the standard capacity after the first cycle. The higher the cycle number, the better lifespan characteristics the battery is considered to have.

**Table 1**

| | Number of cycles [cycles] |
|---|---|
| Example 1 (double-sided heat-polymerizable GPE-coated solid electrolyte (SE) film) | 520 |
| Example 2 (cathode-side heat-polymerizable GPE-coated SE film) | 415 |
| Example 3 (anode-side heat-polymerizable GPE-coated SE film) | 380 |
| Example 4 (double-sided high-viscosity electrolyte-coated SE film) | 450 |
| Example 5 (cathode-side high-viscosity electrolyte-coated SE film) | 342 |
| Example 6 (anode-side high-viscosity electrolyte-coated SE film) | 310 |
| Example 7 (double-sided GPE-coated SE film, prepolymerized) | 420 |
| Example 8 (with elastic sheet added to anode) | 540 |
| Reference Example 1 (utilizing Li metal foil as anode) | 20 |
| Comparative Example 1 (double-sided low-viscosity electrolyte-coated SE film) | 150 |
| Comparative Example 2 (double-sided uncoated SE film) | 200 |

As shown in Table 1, the solid secondary batteries of Examples 1 to 8 each show improved lifespan characteristics, relative to the solid secondary batteries of Reference Example 1 and Comparative Examples 1 and 2.

The solid secondary batteries of Examples 1 to 8 each show improved lifespan as volume changes of the cathode layer and/or anode layer during charging and discharging were more effectively accommodated due to decreased interfacial resistances between the solid electrolyte layer and the cathode layer, and between the solid electrolyte layer and the anode layer, relatively increased flexibility of the solid electrolyte layer, and suppressed or reduced pin-hole formation. For example, the lifespan characteristics were improved due to improved adhesion at the interface between the solid electrolyte layer and the cathode layer, the interface between the solid electrolyte layer and the anode layer, and within the solid electrolyte layer, and improved uniformity of ionic conductivity. For example, decreases in the surface of the solid electrolyte layer coming in contact with moisture may suppress or reduce gas generation due to side reactions and also suppress or reduce a decrease in ionic conductivity.

Compared to the solid secondary battery of Example 1, the solid secondary battery of Example 7 shows decreased lifespan characteristics due to limited diffusion of the polymer gel electrolyte into the solid electrolyte layer.

Although not shown in Table 1, the solid secondary battery of Example 9 showed improved lifespan characteristics by utilizing the carbon loaded with silver particles, in comparison to the solid secondary battery of Example 1 utilizing a simple mixture of silver particles and carbon particles. The solid secondary battery of Comparative Example 1, due to utilizing the low-viscosity liquid electrolyte, showed an insignificant effect of organic electrolyte addition, compared to that of the high-viscosity liquid electrolytes of Examples 4 to 6.

The solid secondary battery of Comparative Example 2, due to not containing any organic electrolyte, showed deteriorated lifespan characteristics attributable to increased pin-hole formation in the solid electrolyte layer, accelerated formation of defects such as cracks in the solid electrolyte layer, caused by volume changes of the cathode layer and/or anode layer during charging and discharging, and growth of lithium dendrites resulting from such defects.

In the case of the solid secondary battery of Reference Example 1, the lifespan characteristics of the solid secondary battery deteriorated due to accelerated degradations such as cracks in the solid electrolyte layer, as growth of lithium dendrites from the lithium metal anode increased.

The solid secondary battery of Reference Example 2 had a short circuit occurred before completion of the first cycle and therefore was unavailable for a lifespan characteristics measurement.

### Evaluation Example 2: Evaluation of High-Rate Capability

The solid secondary batteries prepared in Examples 1 to 8, Reference Example 1, and Comparative Examples 1 and 2 were each evaluated for high-rate capability by a cycling test as follows. The cycling test was performed while the solid secondary battery was placed in a constant-temperature bath at 45 °C.
The lithium batteries prepared in Examples 1 to 8, Reference Example 1, and Comparative Examples 1 and 2 were each charged at a constant current of 0.1 C rate at 45 °C until the battery voltage reached 2.5 V (vs. Li) and then, while maintaining 2.5 V in a constant voltage mode, the charging was cut-off at a current of 0.05 C rate. Subsequently, the battery was discharged at a constant current rate of 0.1 C until the battery voltage reached 0.3 V (vs. Li) during discharge (formation cycle).

The lithium battery after the formation cycle was charged at 45 °C at a constant current of 0.2 C rate until the battery voltage reached 2.5 V (vs. Li). Subsequently, the battery was discharged at a constant current of 0.2 C rate until the battery voltage reached 0.3 V (vs. Li) during discharge (1st cycle).

The lithium battery after the 1st cycle was charged at 45 °C at a constant current of 0.2 C rate until the battery voltage reached 2.5 V (vs. Li). Subsequently, the battery was discharged at a constant current of 0.33 C rate until the battery voltage reached 0.3 V (vs. Li) during discharge (2nd cycle).

The lithium battery after the 2nd cycle was charged at 45 °C at a constant current of 0.2 C rate until the battery voltage reached 2.5 V (vs. Li). Subsequently, the battery was discharged at a constant current of 0.5 C rate until the battery voltage reached 0.3 V (vs. Li) during discharge (3rd cycle).

The lithium battery after the 3rd cycle was charged at 45 °C at a constant current of 0.2 C rate until the battery voltage reached 2.5 V (vs. Li). Subsequently, the lithium battery was discharged at a constant current of 1.0 C rate until the battery voltage reached 0.3 V (vs. Li) during discharge (4th cycle).

Throughout the charge-discharge cycles above, a rest period of 10 minutes was provided after each charge/discharge cycle. A part of the room-temperature charge-discharge test results is shown in Table 2. High-rate capability is defined by Equation 1. High-Rate Capability [%] = [Discharge Capacity in the 4th Cycle / Charge Capacity in the 1st Cycle] × 100

**Table 2**

| | High-Rate Capability (1 C/0.2 C) [%] |
|---|---|
| Example 1 (double-sided heat-polymerizable GPE-coated SE film) | 96 |
| Example 2 (cathode-side heat-polymerizable GPE-coated SE film) | 92 |
| Example 3 (anode-side heat-polymerizable GPE-coated SE film) | 89 |
| Example 4 (double-sided high-viscosity electrolyte-coated SE film) | 94 |
| Example 5 (cathode-side high-viscosity electrolyte-coated SE film) | 90 |
| Example 6 (anode-side high-viscosity electrolyte-coated SE film) | 88 |
| Example 7 (double-sided GPE-coated SE film, prepolymerized) | 90 |
| Example 8 (with elastic sheet added to anode) | 96 |
| Reference Example 1 (utilizing Li metal as anode) | 95 |
| Comparative Example 1 (double-sided low-viscosity electrolyte-coated SE film) | 96 |
| Comparative Example 2 (double-sided uncoated SE film) | 88 |

As shown in Table 2, the solid secondary batteries of Examples 1 to 8 have comparable high-rate capability, in comparison to the solid secondary batteries of Reference Example 1 and Comparative Examples 1 and 2.

According to one or more embodiments of the present disclosure, a solid secondary battery may be provided, which has improved lifespan characteristics and high-rate capability by virtue of an organic electrolyte additionally disposed on a surface and/or inside of a solid electrolyte layer, through suppressing a defect of the solid electrolyte layer during charging and discharging processes, and decreasing an internal resistance of the solid secondary battery.

In present disclosure, "not including a or any 'component'" "excluding a or any 'component'", "'component'-free", "free of 'component'" and/or the like refers to that the "component" not being added, selected or utilized as a component in the composition, but the "component" of less than a suitable amount may still be included due to other impurities and/or external factors.

As utilized herein, the terms "substantially," "about," and similar terms are used as terms of approximation and not as terms of degree, and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The battery module, battery pack, battery management system, electric vehicle, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

Embodiments are set out in the following clauses:
Clause 1. A solid secondary battery comprising:
   a cathode layer; an anode layer; and a solid electrolyte layer disposed between the cathode layer and the anode layer,
   wherein the solid secondary battery comprises a first organic electrolyte disposed between the cathode layer and the solid electrolyte layer, a second organic electrolyte disposed between the anode layer and the solid electrolyte layer, a third organic electrolyte disposed in the solid electrolyte layer, or a combination thereof,
   wherein the first organic electrolyte, the second organic electrolyte, and the third organic electrolyte each independently comprises a polymer electrolyte, a liquid electrolyte, or a combination thereof, the liquid electrolyte having a viscosity of 10 cps or more at 25 °C and 1 atm,
   wherein the cathode layer comprises a cathode current collector and a cathode active material layer disposed on one side or both sides of the cathode current collector, the cathode active material layer comprising a Li₂S-containing composite, and
   wherein the anode layer comprises an anode current collector and a first anode active material layer disposed on one side of the anode current collector.
Clause 2. The solid secondary battery of clause 1, further comprising a first interlayer disposed between the cathode layer and the solid electrolyte layer, a second interlayer disposed between the anode layer and the solid electrolyte layer, or a combination thereof,
   wherein the first interlayer comprises the first organic electrolyte and the second interlayer comprises the second organic electrolyte.
Clause 3. The solid secondary battery of clause 1 or clause 2, wherein the polymer electrolyte comprises a polymer comprising a repeat unit having a heat-polymerizable functional group, a thermoset product of the polymer, an oligomer comprising a repeat unit having a heat-polymerizable functional group, a thermoset product of the oligomer, a monomer having a heat-polymerizable functional group, a thermoset product of the monomer, an oligomeric ionic liquid, a polymeric ionic liquid, or a combination thereof.
Clause 4. The solid secondary battery of any one of clauses 1 to 3, wherein the heat-polymerizable functional group comprises a cyano group, a hydroxy group, an amino group, an amide group, an imide group, a carboxyl group, an acid anhydride group, or a combination thereof.
Clause 5. The solid secondary battery of any one of clauses 1 to 4, wherein the liquid electrolyte comprises an ionic liquid, the liquid electrolyte having a viscosity of 15 cps or more at 25 °C and 1 atm.
Clause 6. The solid secondary battery of any one of clauses 1 to 5, wherein the solid electrolyte layer further comprises at least one of the first organic electrolyte and the second organic electrolyte, disposed in the solid electrolyte layer,
   wherein the solid electrolyte layer comprises one surface adjacent to the cathode layer, and the other surface adjacent to the anode layer, and
   wherein the solid electrolyte layer has a concentration gradient of the first organic electrolyte that decreases in a direction from the one surface to the anode layer,
   a concentration gradient of the second organic electrolyte that decreases in a direction from the other surface to the cathode layer, or
   both the concentration gradient of the first organic electrolyte and the concentration gradient of the second organic electrolyte.
Clause 7. The solid secondary battery of any one of clauses 1 to 6, wherein the solid electrolyte layer comprises an inorganic solid electrolyte,
   wherein the inorganic solid electrolyte comprises a sulfide-based solid electrolyte, an oxide-based solid electrolyte, or a combination thereof.
Clause 8. The solid secondary battery of any one of clauses 1 to 7, wherein the sulfide-based solid electrolyte is at least one selected from: Li₂S-P₂S₅; Li₂S-P₂S₅-LiX, wherein X is a halogen element; Li₂S-P₂S₅-Li₂O; Li₂S-P₂S₅-Li₂O-LiI; Li₂S-SiS₂; Li₂S-SiS₂-Lil; Li₂S-SiS₂-LiBr; Li₂S-SiS₂-LiCl; Li₂S-SiS₂-B₂S₃-Lil; Li₂S-SiS₂-P₂S₅-LiI; Li₂S-B₂S₃; Li₂S-P₂S₅-ZₘSₙ, wherein m and n are each a positive number, and Z is one of Ge, Zn, and Ga; Li₂S-GeS₂; Li₂S-SiS₂-Li₃PO₄; Li₂S-SiS₂-LiₚMO_{q}, wherein p and q are each a positive number, and M is one of P, Si, Ge, B, Al, Ga, and In; Li₇₋ₓPS₆₋ₓClₓ, wherein 0≤x≤2; Li₇₋ₓPS₆₋ₓBrₓ, wherein 0≤x≤2; and Li₇₋ₓPS₆₋ₓIₓ, wherein 0≤x≤2,
   wherein the sulfide-based solid electrolyte comprises an argyrodite-type solid electrolyte,
   wherein the argyrodite-type solid electrolyte comprises at least one selected from Li₆PS₅Cl, Li₆PS₅Br, and LisPSsl, and
   wherein the argyrodite-type solid electrolyte has a density of about 1.0 g/cc to about 2.0 g/cc.
Clause 9. The solid secondary battery of any one of clauses 1 to 8, wherein the Li₂S-containing composite comprises a composite of Li₂S and a carbonaceous material, a composite of Li₂S, a carbonaceous material, and a solid electrolyte, a composite of Li₂S and a solid electrolyte, a composite of Li₂S, a carbonaceous material, and a lithium salt, a composite of Li₂S and a lithium salt, a composite of Li₂S and a metal carbide, a composite of Li₂S, a carbonaceous material, and a metal carbide, a composite of Li₂S and a metal nitride, a composite of Li₂S, a carbonaceous material, and a metal nitride, or a combination thereof.
Clause 10. The solid secondary battery of any one of clauses 1 to 9, wherein the lithium salt is a binary compound or a ternary compound,
   wherein the binary compound comprises Lil, LiBr, LiCl, LiF, LiH, Li₂O, Li₂Se, Li₂Te, Li₃N, LisP, Li₃As, LisSb, Li₃Al₂, LiBs, or a combination thereof, or
   wherein the ternary compound comprises Li₃OCl, LiPF₆, LiBF₄, LiSbF₆, LiAsF₆, LiClO₄, LiAlO₂, LiAlCl₄, LiNOs, Li₂CO₃, LiBH₄, Li₂SO₄, Li₃BO₃, Li₃PO₄, Li₄NCl, Li₅NCl₂, Li₃BN₂, or a combination thereof.
Clause 11. The solid secondary battery of any one of clauses 1 to 10, wherein the carbonaceous material comprises a fibrous carbonaceous material, and
   wherein the fibrous carbonaceous material comprises a carbon nanostructure, the carbon nanostructure comprising a carbon nanofiber, a carbon nanotube, a carbon nanobelt, a carbon nanorod, or a combination thereof.
Clause 12. The solid secondary battery of any one of clauses 1 to 11, wherein the Li₂S-containing composite comprises a composite of Li₂S, a lithium salt, and a carbonaceous material,
   wherein, with respect to 100 parts by weight of the Li₂S-containing composite, about 10 parts by weight to about 80 parts by weight of Li₂S, about 1 part by weight to about 40 parts by weight of the lithium salt, and about 1 part by weight to about 20 parts by weight of the carbonaceous material are included,
   wherein the cathode active material layer further comprises a sulfide-based solid electrolyte, and
   wherein the carbonaceous material in the cathode active material layer is disposed only in the Li₂S-containing composite.
Clause 13. The solid secondary battery of any one of clauses 1 to 12, wherein the first anode active material layer comprises an anode active material and a binder,
   wherein the anode active material has a particulate form, and an average particle diameter of the anode active material is 4 µm or less.
Clause 14. The solid secondary battery of any one of clauses 1 to 13, wherein the anode active material layer comprises at least one selected from a carbonaceous anode active material and a metal or metalloid anode active material,
   wherein the carbonaceous anode active material comprises amorphous carbon, crystalline carbon, porous carbon, or a combination thereof, and
   wherein the metal or metalloid anode active material comprises gold (Au), platinum (Pt), palladium (Pd), silicon (Si), silver (Ag), aluminum (Al), bismuth (Bi), tin (Sn), zinc (Zn), or a combination thereof.
Clause 15. The solid secondary battery of any one of clauses 1 to 14, wherein the anode active material comprises a mixture of first particles consisting of amorphous carbon and second particles consisting of a metal or a metalloid,
   wherein a content of the second particles is about 1 wt% to about 60 wt% with respect to a total weight of the mixture.
Clause 16. The solid secondary battery of any one of clauses 1 to 15, wherein an initial charge capacity of the first anode active material layer is 50 % or less of an initial charge capacity of the cathode active material layer.
Clause 17. The solid secondary battery of any one of clauses 1 to 16, wherein the anode active material comprises a carbonaceous support and a metal-based anode active material supported on the carbonaceous support,
   wherein the metal-based anode active material comprises a metal, a metal oxide, a composite of a metal and a metal oxide, or a combination thereof,
   wherein the metal-based anode active material has a particulate form, the metal-based anode active material having a particle diameter of about 1 nm to about 200 nm, and
   wherein the carbonaceous support has a particulate form, the carbonaceous material having a particle diameter of about 10 nm to about 2 µm,
   wherein the solid secondary battery further comprises a second anode active material layer disposed at least one of between the anode current collector and the first anode active material layer, and between the anode current collector and an electrolyte layer,
   wherein the second anode active material layer is a metal layer, the metal layer comprising lithium or a lithium alloy.
Clause 18. The solid secondary battery of any one of clauses 1 to 17, wherein at least one of the cathode current collector and the anode current collector comprises a base film and a metal layer disposed on one side or both sides of the base film,
   wherein the base film comprises a polymer, the polymer comprising polyethylene terephthalate (PET), polyethylene (PE), polypropylene (PP), polybutylene terephthalate (PBT), polyimide (PI), or a combination thereof, and
   wherein the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.
Clause 19. The solid secondary battery of any one of clauses 1 to 18, further comprising a first inactive member disposed on one side surface of the cathode, the first inactive member comprising a flame-retardant inactive member.
Clause 20. The solid secondary battery of any one of clauses 1 to 19, further comprising a second inactive member disposed on the other surface of the anode current collector, the second inactive member comprising a conductive flame-retardant inactive member.

## Claims

1. A solid secondary battery (1) comprising:
a cathode layer (10);
an anode layer (20);
a solid electrolyte layer (30) between the cathode layer (10) and the anode layer (20); and
a first organic electrolyte (100a) between the cathode layer (10) and the solid electrolyte layer (30), a second organic electrolyte (100b) between the anode layer (20) and the solid electrolyte layer (30), a third organic electrolyte (100c) in the solid electrolyte layer (30), or any combination thereof,
wherein the first organic electrolyte (100a), the second organic electrolyte (100b), and the third organic electrolyte (100c) each independently comprises a polymer electrolyte, a liquid electrolyte, or any combination thereof, the liquid electrolyte having a viscosity of 10 cps or more at 25 °C and 1 atm,
wherein the cathode layer (10) comprises a cathode current collector (11) and a cathode active material layer (12) on at least one surface of the cathode current collector (11), the cathode active material layer (12) comprising a Li₂S-containing composite, and
wherein the anode layer (20) comprises an anode current collector (21) and a first anode active material layer (22) on one surface of the anode current collector (21).

2. The solid secondary battery (1) as claimed in claim 1, further comprising a first interlayer (60) between the cathode layer (10) and the solid electrolyte layer (30), a second interlayer (70) between the anode layer (20) and the solid electrolyte layer (30), or any combination thereof,
wherein the first interlayer (60) comprises the first organic electrolyte (100a), and the second interlayer (70) comprises the second organic electrolyte (100b).

3. The solid secondary battery (1) as claimed in claim 1 or 2 , wherein the polymer electrolyte comprises a polymer comprising a repeat unit having a heat-polymerizable functional group, a thermoset product of the polymer, an oligomer comprising a repeat unit having a heat-polymerizable functional group, a thermoset product of the oligomer, a monomer having a heat-polymerizable functional group, a thermoset product of the monomer, an oligomeric ionic liquid, a polymeric ionic liquid, or any combination thereof, preferably the heat-polymerizable functional group comprises a cyano group, a hydroxy group, an amino group, an amide group, an imide group, a carboxyl group, an acid anhydride group, or any combination thereof.

4. The solid secondary battery (1) as claimed any of the claims 1 to 3, wherein the liquid electrolyte comprises an ionic liquid, the liquid electrolyte having a viscosity of 15 cps or more at 25 °C and 1 atm.

5. The solid secondary battery (1) as claimed in any of the claims 1 to 4, wherein the solid electrolyte layer (30) further comprises at least one of the first organic electrolyte (100a) or the second organic electrolyte (100b), in the solid electrolyte layer (30),
wherein the solid electrolyte layer (30) comprises one surface adjacent to the cathode layer (10), and an other surface adjacent to the anode layer (20), and
wherein the solid electrolyte layer (30) has a concentration gradient of the first organic electrolyte (100a) that decreases in a direction from the one surface to the anode layer (20),
a concentration gradient of the second organic electrolyte (100b) that decreases in a direction from the other surface to the cathode layer (10), or
both the concentration gradient of the first organic electrolyte (100a) and the concentration gradient of the second organic electrolyte (100b).

6. The solid secondary battery (1) as claimed in any of the claims 1 to 5, wherein the solid electrolyte layer (30) comprises an inorganic solid electrolyte, and
wherein the inorganic solid electrolyte comprises a sulfide-based solid electrolyte, an oxide-based solid electrolyte, or any combination thereof, whereby preferably:
the sulfide-based solid electrolyte is at least one selected from among: Li₂S-P₂S₅; Li₂S-P₂S₅-LiX, wherein X is a halogen element; Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S-P₂S₅-ZₘSₙ, wherein m and
n are each a positive number, and Z is one selected from among Ge, Zn, and Ga; Li₂S-GeS₂; Li₂S-SiS₂-Li₃PO₄; Li₂S-SiS₂-LiₚMO_{q}, wherein p and q are each a positive number, and M is one selected from among P, Si, Ge, B, Al, Ga, and In; Li₇₋ₓPS₆₋ₓClₓ, wherein 0≤x≤2; Li₇₋ₓPS₆₋ₓBrₓ, wherein 0≤x≤2; and
Li₇₋ₓPS₆₋ₓIₓ, wherein 0≤x≤2, or
wherein the sulfide-based solid electrolyte comprises an argyrodite-type or
kind solid electrolyte,
wherein the argyrodite-type or kind solid electrolyte comprises at least one selected from among Li₆PS₅Cl, Li₆PS₅Br, and LisPSsl, and
wherein the argyrodite-type or kind solid electrolyte has a density of about 1.0 g/cc to about 2.0 g/cc;
- the Li₂S-containing composite comprises a composite of Li₂S and a carbonaceous material, a composite of Li₂S, a carbonaceous material, and a solid electrolyte, a composite of Li₂S and a solid electrolyte, a composite of Li₂S, a carbonaceous material, and a lithium salt, a composite of Li₂S and a lithium salt, a composite of Li₂S and a metal carbide, a composite of Li₂S, a carbonaceous material, and a metal carbide, a composite of Li₂S and a metal nitride, a composite of Li₂S, a carbonaceous material, and a metal nitride, or any combination thereof.
- the lithium salt is a binary compound and/or a ternary compound,
wherein the binary compound comprises Lil, LiBr, LiCl, LiF, LiH, Li₂O, Li₂Se, Li₂Te, Li₃N, LisP, Li₃As, LisSb, Li₃Al₂, LiBs, or any combination thereof, and
wherein the ternary compound comprises Li₃OCl, LiPF₆, LiBF₄, LiSbF₆, LiAsF₆, LiClO₄, LiAlO₂, LiAlCl₄, LiNOs, Li₂CO₃, LiBH₄, Li₂SO₄, Li₃BO₃, Li₃PO₄, Li₄NCl, Li₅NCl₂, Li₃BN₂, or any combination thereof.

7. The solid secondary battery (1) as claimed in any of the claims 1 to 6, wherein the carbonaceous material comprises a fibrous carbonaceous material, and
wherein the fibrous carbonaceous material comprises a carbon nanostructure, the carbon nanostructure comprising a carbon nanofiber, a carbon nanotube, a carbon nanobelt, a carbon nanorod, or any combination thereof.

8. The solid secondary battery (1) as claimed in any of the claims 1 to 7, wherein the Li₂S-containing composite comprises a composite of Li₂S, a lithium salt, and a carbonaceous material,
wherein, with respect to 100 parts by weight of the Li₂S-containing composite, about 10 parts by weight to about 80 parts by weight of Li₂S, about 1 part by weight to about 40 parts by weight of the lithium salt, and about 1 part by weight to about 20 parts by weight of the carbonaceous material are included,
wherein the cathode active material layer (12) further comprises a sulfide-based solid electrolyte, and
wherein the carbonaceous material in the cathode active material layer (12) is only contained in the Li₂S-containing composite.

9. The solid secondary battery (1) as claimed in any of the claims 1 to 8, wherein the first anode active material layer (22) comprises an anode active material and a binder, and
wherein the anode active material is in a form of particles, and an average particle diameter of the particles of the anode active material is 4 µm or less.

10. The solid secondary battery (1) as claimed in any of the claims 1 to 9, wherein the first anode active material layer (22) comprises at least one selected from among a carbonaceous anode active material and a metal and/or metalloid anode active material,
wherein the carbonaceous anode active material comprises amorphous carbon, crystalline carbon, porous carbon, or any combination thereof, and
wherein the metal or metalloid anode active material comprises gold, platinum, palladium, silicon, silver, aluminum, bismuth, tin, zinc, or any combination thereof
and / or
the first anode active material layer (22) comprises an anode active material comprising a mixture of first particles of amorphous carbon and second particles of a metal or a metalloid,
wherein an amount of the second particles is about 1 wt% to about 60 wt% with respect to a total weight of the mixture.

11. The solid secondary battery (1) as claimed in in any of the claims 1 to 10, wherein an initial charge capacity of the first anode active material layer (22) is 50 % or less of an initial charge capacity of the cathode active material layer (12).

12. The solid secondary battery (1) as claimed in any of the claims 1 to 11, wherein the first anode active material layer (22) comprises an anode active material comprising a carbonaceous support and a metal-based anode active material supported on the carbonaceous support,
wherein the metal-based anode active material comprises a metal, a metal oxide, a composite of a metal and a metal oxide, or any combination thereof,
wherein the metal-based anode active material is in a form of particles, and an average particle diameter of the particles of the metal-based anode active material is about 1 nm to about 200 nm,
wherein the carbonaceous support is in a form of particles, an average particle diameter of the particles of the carbonaceous support is about 10 nm to about 2 µm,
wherein the solid secondary battery (1) further comprises a second anode active material layer between the anode current collector (21) and the first anode active material layer (22) and/or between the anode current collector (21) and the solid electrolyte layer (30), and
wherein the second anode active material layer is a metal layer, the metal layer comprising lithium or a lithium alloy.

13. The solid secondary battery (1) as claimed in any of the claims 1 to 12, wherein at least one of the cathode current collector (11) or the anode current collector (21) comprises a base film and a metal layer on at least one side of the base film,
wherein the base film comprises a polymer, the polymer comprising polyethylene terephthalate, polyethylene, polypropylene, polybutylene terephthalate, polyimide, or any combination thereof, and
wherein the metal layer comprises indium, copper, magnesium, stainless steel, titanium, iron, cobalt, nickel, zinc, aluminum, germanium, lithium, or any alloy thereof.

14. The solid secondary battery (1) as claimed in any of the claims 1 to 13, further comprising a first inactive member (40) on a side surface of the cathode layer (10), the first inactive member (40) comprising a flame-retardant inactive member.

15. The solid secondary battery (1) as claimed in in any of the claims 1 to 14, further comprising a second inactive member (50) on an other surface of the anode current collector (21), the second inactive member (50) comprising a conductive flame-retardant inactive member.
